(19) Europäisches Patentamt
European Patent Office
Office européen des brevets

(11) EP 2 090 594 B1

(12) **EUROPEAN PATENT SPECIFICATION**

(45) Date of publication and mention of the grant of the patent:
**24.11.2010 Bulletin 2010/47**

(21) Application number: **07830844.2**

(22) Date of filing: **30.10.2007**

(51) Int Cl.:
***C08F 2/44*** *(2006.01)* ***C08F 265/02*** *(2006.01)*
***C09D 4/02*** *(2006.01)*

(86) International application number:
**PCT/JP2007/071110**

(87) International publication number:
**WO 2008/056569 (15.05.2008 Gazette 2008/20)**

(54) **ACTIVE-ENERGY-RAY-CURABLE WATER-BASED RESIN COMPOSITION, ACTIVE-ENERGY-RAY-CURABLE COATING MATERIAL, METHOD OF FORMING CURED COATING FILM, AND ARTICLE**

MIT AKTIVER STRAHLUNG HÄRTBARE WASSERBASIERTE HARZZUSAMMENSETZUNG, MIT AKTIVER STRAHLUNG HÄRTBARE BESCHICHTUNGSMASSE, VERFAHREN ZUR BILDUNG EINES GEHÄRTETEN BESCHICHTUNGSFILMS UND GEGENSTAND

COMPOSITION DE RÉSINE À BASE AQUEUSE DURCISSABLE PAR UN RAYONNEMENT D'ÉNERGIE ACTIVE, MATIÈRE DE REVÊTEMENT DURCISSABLE PAR RAYONNEMENT D'ÉNERGIE ACTIVE, PROCÉDÉ DE FORMATION D'UN FILM DE REVÊTEMENT DURCI ET ARTICLE CORRESPONDANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.11.2006 JP 2006303891**

(43) Date of publication of application:
**19.08.2009 Bulletin 2009/34**

(73) Proprietor: **DIC Corporation**
**Tokyo 174-8520 (JP)**

(72) Inventors:
- **ITOU, Masahiro**
  **c/o DIC Corporation, Chiba Plant**
  **Chiba 290-8585 (JP)**
- **TANIMOTO, Youichi c/o DIC Corporation, Chiba Plant**
  **Chiba 290-8585 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**GB-A- 1 523 084**
**JP-A- 08 311 398**
**JP-A- 2004 331 865**
**JP-A- 2004 339 310**
**US-A- 3 150 118**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 090 594 B1

## Description

TECHNICAL FIELD

The present invention relates to an active energy-ray-curable water-based resin composition, which is used as a material for coating plastics, films, and the like, has excellent storage stability, and of which the cured coating film has a satisfactory appearance and excellent wear resistance and water resistance; an active energy-ray-curable coating material which contains the resin composition; a method of forming a cured coating film by using the coating material; and an article in which the cured coating film of the coating material is provided.

BACKGROUND ART

Since an active energy-ray-curable composition has features in that a thermal history on a substrate to be coated is few, and the hardness of a coating film or abrasion resistance is excellent, the composition has been used as a hard coating material for plastic substrates such as household electric appliances, mobile phones, and the like. The examples of an active energy-ray-curable composition may include an active energy-ray-curable composition (nonaqueous active energy-ray-curable composition) which contains a polymer having a polymerizable unsaturated double bond (for example, an acrylic acrylate and the like) or a polymer substantially having no polymerizable unsaturated double bond (for example, an acrylic resin and the like), a polymerizable monomer, and an organic solvent as a diluent, and the like. When the active energy-ray-curable composition is used, for example, as an active energy-ray-curable coating material for spray coating, the composition contains the organic solvent in an amount as high as 50 to 90 wt% with respect to the weight of the coating material. Therefore, there is a problem in that a working environment deteriorates because the organic solvent in the coating material is volatilized when a cured coating film is formed on a surface of the substrates such as plastics with the use of the active energy-ray-curable coating material containing the resin composition. In addition, the volatilized organic solvent causes a problem of air pollution.

Meanwhile, an active energy-ray-curable water-based composition in which water is used as a diluent has been investigated. Specifically, for example, a water-based photosensitive coating composition prepared by compounding a water-based resin dispersion element (1) having an average particle size of 10 to 100 nm, a photosensitive oligomer (2) having at least one carbon-carbon double bond in molecules thereof, and a photosensitive monomer (3) having at least one carbon-carbon double bond in molecules thereof is disclosed (for example, refer to Patent Document 1). Specifically, for example, in Example 1 in Patent Document 1, a photosensitive coating composition prepared by containing 100 parts by weight of acrylic fine particle emulsion (for example, NANOCRYL BCX-2914 manufactured by Toyo Ink Mfg. Co., Ltd. and the like), 2.3 parts by weight of water-soluble urethane acrylate, and 2.3 parts by weight of trimethylolpropane triacrylate are disclosed.

In addition, an ultraviolet-ray-curable water-based coating material composition, which contains a water-soluble resin (A) having a (meth)acryloyl group, a polyfunctional (meth)acrylate compound (B), and a photopolymerization initiator, and is in an emulsified state, is disclosed (for example, refer to Patent Document 2). Specifically, the examples of the ultraviolet-ray-curable water-based coating material composition include an emulsion prepared by dispersing a water-dispersible acrylic resin and a urethane acrylate oligomer in water. The water-dispersible acrylic resin is obtained by neutralizing a carboxyl group of an acrylic resin that is obtained using a methyl methacrylate as an essential component.

However, the acrylic fine particle emulsion used in Patent Document 1 has insufficient capability (dispersing force) to disperse hydrophobic polymerizable monomers such as trimethylolpropane triacrylate and the like or stability. For this reason, in order to obtain an active energy-ray-curable resin composition by using the acrylic fine particle emulsion, the hydrophobic polymerizable monomers efficient in improving wear resistance and water resistance are used in combination of water-soluble urethane acrylate or self-emulsifiable urethane acrylate to complement a dispersing force or stability for the acrylic fine particle emulsion to water-soluble urethane acrylate or self-emulsifiable urethane acrylate, thereby dispersing the hydrophobic polymerizable monomers in water. For this reason, an effect of the hydrophobic polymerizable monomers capable of improving wear resistance and water resistance is not sufficiently exhibited so that a cured coating film obtained by using the water-based photosensitive coating composition of Patent Document 1 has insufficient wear resistance and water resistance.

In addition, for the ultraviolet-ray-curable water-based coating material composition disclosed in Patent Document 2, the hydrophobic urethane acrylate oligomer is used as the polyfunctional (meth)acrylate in order to improve abrasion resistance and water resistance of the cured coating film. However, there are problems in that even the water-soluble resin (A) containing the (meth)acryloyl group used for the ultraviolet-ray-curable water-based coating material composition does not have sufficient dispersing force for dispersing the hydrophobic urethane acrylate oligomer in water; and when there is an attempt to disperse the polyfunctional (meth)acrylate compound (B) in the water-soluble resin (A) containing the (meth)acryloyl group in water, dispersion in water is difficult or a part of the polyfunctional (meth)acrylate compound (B) is immediately isolated. For this reason, it is likely to get defects such as eye holes or orange peel on the

cured coating film. In addition, the ultraviolet-ray-curable water-based coating material composition does not have sufficient storage stability.

Patent Document 1: Japanese Unexamined Patent Application Publication No. H9-302266

Patent Document 2: Japanese Unexamined Patent Application Publication No. 2004-010779

DISCLOSURE OF INVENTION

Problems that the Invention is to solve

An object of the present invention is to provide an active energy-ray-curable water-based resin composition, which is used as a material for coating plastics, films, and the like, and has excellent storage stability, and of which the cured coating film has a satisfactory appearance and excellent wear resistance and water resistance; an active energy-ray-curable coating material which contains the composition; a method of forming a cured coating film by using the coating material; and an article in which the cured coating film of the coating material is provided on the surfaces thereof.

Means for Solving the Problems

As a result of a keen examination performed by the present inventors, they have found the following.

(1) An acrylic resin (hydrophilic acrylic resin), which is obtained by using 2 to 15 wt% of a radical polymerizable monomer, which contains an alkylene group having 2 to 8 carbon atoms and a carboxyl group is added to the end of the alkylene group, with respect to the weight of the resin formed and 55 to 70 wt% of methyl methacrylate with respect to the weight of the resin formed, and which contains 1.3 to 2.7 mmol/g of a neutralized carboxyl group, has strong dispersing force for dispersing the hydrophobic polymerizable monomer so that the resin can satisfactorily disperse even the hydrophobic polymerizable monomer in water which contains few organic solvents.

(2) Since the above-mentioned active energy-ray-curable water-based resin composition has strong dispersing force because of the hydrophilic acrylic resin, it makes it possible to stably disperse the monomer for a long period of time even when a hydrophobic polymerizable monomer is used as the polymerizable monomer. Accordingly, the active energy-ray-curable water-based resin composition has satisfactory storage stability.

(3) As mentioned above, the acrylic resin is capable of satisfactorily dispersing the hydrophobic polymerizable monomer. Therefore, when an active energy-ray-curable water-based coating material containing the acrylic resin is used, it is possible to obtain a cured coating film on which holes or orange peel is hardly generated.

(4) In addition, the cured coating film obtained by using the active energy-ray-curable water-based coating material has excellent wear resistance and water resistance.

(5) When the active energy-ray-curable coating material is coated on a surface of a substrate and then the coated active energy-ray-curable coating material is cured by irradiating it with an actinic energy ray, it makes it possible to easily form a cured coating film which has excellent abrasion resistance and water resistance.

(6) Since surfaces of an article in which the cured coating film of the active energy-ray-curable coating material is provided on the surfaces thereof are covered with the cured coating film having no holes or orange peel, beautiful appearance is given. In addition, since the cured coating film has excellent abrasion resistance and water resistance,

the durability of the article is improved. Therefore, the worth of the article increases.

The present invention is completed with respect to the above-mentioned findings.

In other words, the present invention is to provide an active energy-ray-curable water-based resin composition, which is obtained by dispersing a compound (B) having 8.6 to 10.5 mmol/g of a polymerizable unsaturated double bond, either in a resin solution prepared by dissolving in water an acrylic resin (A) that is obtained by using 2 to 15 wt% of a radical polymerizable monomer represented by the following general formula (1) with respect to the weight of the resin formed and 55 to 70 wt% of methyl methacrylate with respect to the weight of the resin formed and that contains 1.3 to 2.7 mmol/g of a neutralized carboxyl group, or in a resin dispersion solution prepared by dispersing the acrylic resin (A), in which the ratio ((B)/(A)) of the content of the compound (B) to that of the acrylic resin (A) is 1.5 to 6 in terms of weight.

[Chemical Formula 1]

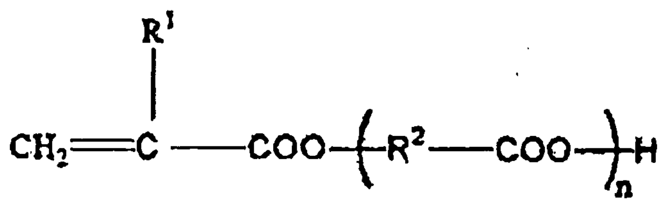

(1)

(wherein $R^1$ is a hydrogen atom or a methyl group; $R^2$ is an alkylene group having 2 to 8 carbon atoms; and n is an integer of 1 to 10).

In addition, the present invention is to provide an active energy-ray-curable coating material which contains the active energy-ray-curable water-based resin composition.

In addition, the present invention is to provide a method of forming a cured coating film which includes coating a substrate with the active energy-ray-curable coating material and curing the coated active energy-ray-curable coating material by irradiating an actinic energy ray.

In addition, the present invention is to provide an article in which a cured coating film of the active energy-ray-curable coating is provided.

Effects of the Invention

The active energy-ray-curable water-based resin composition of the invention has excellent storage stability and the cured coating film thereof has a satisfactory appearance and excellent wear resistance and water resistance. In addition, when the active energy-ray-curable coating material of the present invention is used, it is possible to obtain the cured coating film which has a satisfactory appearance and excellent wear resistance and water resistance. In addition, the cured coating film of the present invention has a satisfactory appearance and it is possible to easily obtain the cured coating film which has excellent wear resistance and water resistance. Moreover, the article of the present invention has a satisfactory appearance and the cured coating film which has excellent wear resistance and water resistance.

BEST MODE FOR CARRYING OUT THE INVENTION

The acrylic resin (A) used in the present invention is obtained by using 2 to 15 wt% of a radical polymerizable monomer represented by the above general formula (1) with respect to the weight of the resin formed and 55 to 70 wt% of methyl methacrylate with respect to the weight of the resin formed, and contains 1.3 to 2.7 mmol/g of a neutralized carboxyl group. When the acrylic resin in which ε-carboxy-polycaprolactone (meth)acrylate is used in an amount of less than 2 wt% with respect to the weight of the resin formed is used, dispersing stability is insufficient so that problems in that precipitates are produced or a separation is made are arisen. As a result, an active energy-ray-curable water-based resin composition having insufficient storage stability is produced, and therefore it is not preferable. When the acrylic resin in which ε-carboxy-polycaprolactone (meth)acrylate is used in an amount greater than 15 wt% with respect to the weight of the resin formed is used, an active energy-ray-curable water-based resin composition which only provides a cured coating film having insufficient wear resistance is obtained as it is softened. Therefore, it is not preferable. As for the acrylic resin (A) used in the present invention, it is preferable to use the acrylic resin obtained by using 3 to 10 wt%

of ε-carboxy-polycaprolactone (meth)acrylate with respect to the weight of the resin formed because the acrylic resin can provide an active energy-ray-curable water-based resin composition having excellent storage stability.

In addition, when the acrylic resin in which methyl methacrylate is used in an amount of less than 55 wt% with respect to the weight of the resin formed is used, dispersing stability is insufficient so that problems in that precipitates are produced or a separation is made arise. As a result, an active energy-ray-curable water-based resin composition having insufficient storage stability is produced, and therefore it is not preferable. When the acrylic resin in which methyl methacrylate is used in an amount greater than 70 wt% with respect to the weight of the resin formed is used, fluidity of the acrylic resin is deteriorated so that the leveling property is deteriorated. For this reason, the appearance of the coating film is deteriorated, viscosity of the obtained acrylic resin becomes greatly elevated, and the active energy-ray-curable water-based resin composition which is hard to handle is produced. Therefore, it is not preferable. As for the acrylic resin (A) used in the present invention, it is preferable to use the acrylic resin obtained by using methyl methacrylate in an amount of 55 to 65 wt% with respect to the weight of the resin formed because the acrylic resin can provide an active energy-ray-curable water-based resin composition having satisfactory storage stability and the obtained cured coating film has excellent appearance and substrate adhesiveness.

In addition, the acrylic resin (A) used in the present invention contains a neutralized carboxyl group in an amount in a range of 1.3 to 2.7 mmol/g. When the acrylic resin which contains the neutralized carboxyl group in an amount of less than 1.3 mmol/g is used, the active energy-ray-curable resin composition or the active energy-ray-curable coating material of the present invention has insufficient storage stability. Therefore, it is not preferable. When the acrylic resin which contains the neutralized carboxyl group in an amount exceeding 2.7 mmol/g is used, water resistance of the active energy-ray-curable resin composition or of the cured coating film of the active energy-ray-curable coating material of the present invention is deteriorated. Therefore, it is not preferable. As for the acrylic resin (A) used in the present invention, it is preferable to use the acrylic resin which contains the neutralized carboxyl group in an amount in a range of 1.5 to 2.2 mmol/g because the resin can provide an active energy-ray-curable resin composition or the active energy-ray-curable coating material having excellent storage stability and it is possible to obtain the cured coating film having excellent water resistance.

The content (molar quantity) of the neutralized carboxyl group was determined to have the same molar quantity of a basic compound which is calculated from an amine value of a basic compound used in the neutralization. Herein, the amine value of the basic compound used in the neutralization were obtained by dissolving 1.0 g of the basic compound sample in 5 ml of tetrahydrofuran and carrying out a neutralizing titration with 0.5 mol/l of a hydrochloric acid solution by using bromphenol blue as an indicator.

The acrylic resin (A) used in the present invention, for example, may be obtained by using a radical polymerizable monomer represented by the above general formula (1) in an amount of 2 to 15 wt% with respect to the weight of the resin formed and a methyl methacrylate in an amount of 55 to 70 wt% with respect to the weight of the resin formed, synthesizing an acrylic resin (a) containing a carboxyl group, and neutralizing the carboxyl group in the acrylic resin (a) by using a basic compound.

The acrylic resin (A) used in the present invention contains the carboxyl group neutralized as mentioned above in an amount in a range of 1.3 to 2.7 mmol/g. Such acrylic resin (A) may be obtained, for example, according to a method in which an acrylic resin containing carboxyl group in an amount in a range of 1.3 to 2.7 mmol/g is used as the acrylic resin (a) and the whole carboxyl group in the acrylic resin (a) is neutralized by a basic compound (neutralization ratio 100%), a method in which an acrylic resin containing carboxyl group in an amount equal to or higher than 2.7 mmol/g is used as the acrylic resin (a) and a part of the carboxyl group in the acrylic resin (a) is neutralized by a basic compound, and the like. Specific examples of a method for neutralizing a part of the carboxyl group by using the basic compound include preparing the resin to contain 1.5 mmol/g of the neutralized carboxyl group therein which is obtained by neutralizing a part, for example, 85% of the carboxyl group in the acrylic resin (a) having the acid value of 100 mgKOH/g; preparing the resin to contain 1.6 mmol/g of the neutralized carboxyl group therein which is obtained by neutralizing the whole carboxyl group in the acrylic resin (a) having an acid value of 90 mgKOH/g; and the like.

As for the acrylic resin (A) used in the present invention, an acrylic resin obtained by using an acrylic resin containing a carboxyl group in an amount in a range of 1.3 to 2.7 mmol/g and neutralizing the whole carboxyl group in the resin is preferable because the acrylic resin can provide an active energy-ray-curable water-based resin composition or an active energy-ray-curable coating material having excellent storage stability. Accordingly, as for the acrylic resin (a) used for the preparation of the acrylic resin (A) used in the present invention, it is preferable to use the acrylic resin which contains the carboxyl group in an amount in a range of 1.3 to 2.7 mmol/g.

The acid value of the acrylic resin (a) containing the carboxyl group according to the present invention was determined by dissolving 1.0 g of the resin sample in a solution in which 1.5 ml of toluene and 3.5 ml of methanol are mixed and carrying out a neutralizing titration with 0.1 mol/l of a potassium hydroxide/ethanol solution by using phenolphthalein as an indicator.

The acrylic resin (a) containing the carboxyl group may be synthesized, for example, by using a radical polymerizable monomer represented by the above general formula (1) in an amount of 2 to 15 wt% with respect to the weight

of the resin formed, methyl methacrylate in an amount of 55 to 70 wt% with respect to the weight of the resin formed, and an ethylenically unsaturated monomer containing a carboxyl group as essential components and, if necessary, using the mixture in which other polymerizable monomers are additionally mixed; and according to a solution polymerization method in which the mixture is subjected to a radical polymerization reaction in a solvent under the presence of a polymerization initiator. The reaction may be carried out under normal pressure or under high pressure. In addition, a molecular weight regulation may be carried out, for example, by regulating the amount of the polymerization initiator to be introduced.

Examples of the radical polymerizable monomer represented by the above general formula (1) include ε-carboxy-polycaprolactone (meth)acrylate and the like. Specific examples thereof include ε-carboxy-polycaprolactone acrylate, ε-carboxy-polycaprolactone methacrylate, and the like. Among these, ε-carboxy-polycaprolactone acrylate is preferable because it has been stably supplied to the market and is easy to obtain.

The above-mentioned ε-carboxy-polycaprolactone (meth)acrylate may be obtained, for example, by mixing and stirring (meth)acrylate and ε-caprolactone under the presence of acid catalysts and reacting the mixture at 40 to 150˚C.

Examples of the acid catalysts include p-toluenesulfonic acid, benzenesulfonic acid, aluminum chloride, tin(II) chloride, and the like. As for the acid catalyst, it is preferable to use the catalyst in the range of 1 to 20 parts by weight relative to 100 parts by weight of (meth)acrylate.

Examples of the ethylenically unsaturated monomers containing the carboxyl group include (meth)acrylate, crotonic acid, isocrotonic acid, 2-methacryloxy ethyl succinic acid, 2-methacryloxy ethyl hexahydrophthalic acid, 2-methacryloxy ethyl glutarate; dicarboxylic acid and an anhydride thereof such as (anhydrous) maleic acid, fumaric acid, (anhydrous) itaconic acid, and the like; mono-alkyl esters of dicarboxylic acid such as monomethyl maleate, monoethyl maleate, monobutyl maleate, monooctyl maleate, monomethyl fumarate, monoethyl fumarate, monobutyl fumarate, monooctyl fumarate, monomethyl itaconate, monoethyl itaconate, monobutyl itaconate, monooctyl itaconate, and the like; and the like. As for the ethylenically unsaturated monomers containing the carboxyl group, (meth)acrylate such as acrylic acid, methacrylic acid, and the like is preferable. The ethylenically unsaturated monomers containing the carboxyl group may be used alone or in combination of two or more kinds thereof. Among the ethylenically unsaturated monomers containing the carboxyl group, acrylic acid is preferable because it makes it possible to obtain an acrylic resin (A) having low viscosity and excellent dispersibility.

Examples other than the above-mentioned ethylenically unsaturated monomers include alkyl (meth)acrylates such as methyl acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, 2-ethylhexyl (meth)acrylate, lauryl (meth)acrylate, octadecyl (meth) acrylate, docosanyl (meth)acrylate, cyclopentyl (meth)acrylate, cyclohexyl (meth)acrylate, bornyl (meth)acrylate, isobornyl (meth)acrylate, dicyclopentanyl (meth)acrylate, cycloalkyl (meth)acrylate, and the like;

ethylenically unsaturated monomers containing a hydroxyl group such as hydroxy alkyl (meth)acrylates e.g. hydroxyl ethyl (meth)acrylate, hydroxyl propyl (meth)acrylate, hydroxyl butyl (meth)acrylate, and the like, or lactone adducts e.g. ε-caprolactone, γ-valerolactone of such monomers, and the like;

aromatic vinyl compounds such as styrene, p-tert-butyl styrene, α-methyl styrene, vinyl toluene, and the like;

ω-alkoxy alkyl (meth)acrylates such as 2-methoxy ethyl (meth)acrylate, 4-methoxy butyl (meth)acrylate, and the like; vinyl monomers containing a tertiary amide group, such as N,N-dimethyl (meth)acrylamide and the like; vinyl monomers having a polyalkylene oxide structure, such as methoxy polyethylene glycol (meth)acrylate, methoxy polypropylene glycol (meth)acrylate, and the like; alkoxy methyl (meth)acrylamides such as n-methylol (meth)acrylamide, n-methoxy methyl (meth)acrylamide, n-ethoxy methyl (meth)acrylamide, n-buthoxy methyl (meth)acrylamide, iso-buthoxy methyl (meth)acrylamide, and the like;

vinyl monomers containing a secondary amino group, such as n-methyl amino ethyl (meth)acrylate and the like; vinyl monomers containing a actinic methylene group, such as vinyl acetoacetate, 2-acetoacetoxyethyl (meth) acrylate, and the like; vinyl monomers containing a hydrolyzable silyl group, such as vinyl trimethoxysilane, 3-(meth) acryloyl oxy propyl trimethoxysilane, and the like;

vinyl monomers containing a silyl ester group, such as trimethylsilyl (meth)acrylate and the like; vinyl monomers containing an epoxy group, such as glycidyl (meth)acrylate, methyl glycidyl (meth)acrylate, 3,4-epoxycyclohexyl (meth) acrylate, glycidyl vinyl ether, allyl glycidyl ether, and the like; vinyl monomers containing isocyanate, such as 2-isocyanate propene, 2-isocyanate ethyl vinyl ether, 2-isocyanate ethyl methacrylate, m-isopropenyl-α,α-dimethylbenzyl isocyanate, and the like; and the like. These may be used alone or in combination of two or more kinds thereof.

As for the acrylic resin (A) used in the present invention, an acrylic resin having no polymerizable unsaturated bond is preferable in order to relieve curing shrinkage and to obtain a cured coating film having an excellent substrate adhesiveness. When the acrylic resin is prepared by using the radical polymerizable monomer represented by the above general formula (1), methyl methacrylate, an ethylenically unsaturated monomer containing a carboxyl group, and the other polymerizable monomer as raw materials, the acrylic resin which does not have the polymerizable unsaturated bond can be prepared by using a monomer which has one ethylenically unsaturated monomer as the ethylenically

unsaturated monomer containing the carboxyl group and as the other polymerizable monomer.

As for the acrylic resin (A) used in the present invention, an acrylic resin having an alkyl group at a side chain thereof is preferable because it makes it possible to obtain an active energy-ray-curable water-based resin composition or an active energy-ray-curable coating material which provides a cured coating film having excellent adhesiveness and satisfactory appearance. Among the above-mentioned alkyl groups, an alkyl group having 2 to 8 carbon atoms is more preferable because it makes it possible to obtain the active energy-ray-curable resin composition or the active energy-ray-curable coating material which provides a cured coating film having excellent adhesiveness and satisfactory appearance, and has excellent storage stability. Examples of the alkyl groups having 2 to 8 carbon atoms include a methyl group, an ethyl group, an n-propyl group, an i-propyl group, an n-butyl group, an i-butyl group, a t-butyl group, a cyclohexyl group, a 2-ethylhexyl group, and the like.

The acrylic resin having an alkyl group at the side chain thereof as the acrylic resin (A) can be obtained, for example, by using an ethylenically unsaturated monomer having an alkyl group at the time of synthesizing the acrylic resin (a). Examples of the ethylenically unsaturated monomer having an alkyl group include the above-mentioned alkyl (meth)acrylates and the like. As for a used amount of the ethylenically unsaturated monomer having the alkyl group used for synthesizing the acrylic resin (a), 1 to 25 wt% with respect to the weight of the resin formed is preferable because it makes it possible to produce an active energy-ray-curable water-based resin composition or an active energy-ray-curable coating material which has excellent storage stability, and the obtained cured coating film has satisfactory substrate adhesiveness and excellent appearance; and 3 to 20 wt% is more preferable. Among the ethylenically unsaturated monomers having the alkyl group, it is preferable to use an n-butyl (meth)acrylate because it makes it possible to produce an active energy-ray-curable water-based resin composition or an active energy-ray-curable coating material which has excellent storage stability.

Among the acrylic resins (A) used in the present invention, an acrylic resin having a hydroxyl group is preferable because it makes it possible to produce an active energy-ray-curable water-based resin composition or an active energy-ray-curable coating material which has excellent storage stability and provides a cured coating film having satisfactory water resistance. Among the acrylic resins having the hydroxyl group, the acrylic resin having a hydroxyl value of 15 to 100 mgKOH/g is preferable and the acrylic resin having a hydroxyl value of 25 to 65 mgKOH/g is more preferable.

Among the acrylic resins (A), the acrylic resin having the hydroxyl group may be obtained, for example, by using the radical polymerizable monomer represented by the above general formula (1) as the acrylic resin (a) in an amount of 2 to 15 wt% with respect to the weight of the resin formed, methyl methacrylate in an amount of 55 to 70 wt% with respect to the weight of the resin formed, an ethylenically unsaturated monomer containing a carboxyl group, and an ethylenically unsaturated monomer containing a hydroxyl group as essential components and, if necessary, using the mixture in which other polymerizable monomers are additionally mixed; synthesizing an acrylic resin according to a solution polymerization method in which the mixture is subjected to a radical polymerization reaction in a solvent under the presence of a polymerization initiator; and neutralizing the carboxyl group in the acrylic resin by using a basic compound.

Examples of the ethylenically unsaturated monomers containing the hydroxyl group include hydroxyethyl (meth) acrylate, hydroxypropyl (meth)acrylate, hydroxybutyl (meth)acrylate, and the like. Among these, hydroxyethyl (meth) acrylate is preferable because it makes it possible to produce an active energy-ray-curable water-based resin composition or an active energy-ray-curable coating material which has excellent storage stability.

The hydroxyl value of the acrylic resin (A) and the like were determined by adding 25 ml of an acetic acid anhydride/pyridine solution (volume ratio of 1/19) to 10.0 g of the resin sample, carrying out a reaction by heating the mixture for one hour, and carrying out a neutralizing titration with 0.5 mol/l of a potassium hydroxide/ethanol solution by using phenolphthalein as an indicator.

As for a solvent used in a synthesis of the acrylic resin (a), a water-miscible organic solvent, which mixes a mixture without separating them from water, is preferable. Among the solvents, an organic solvent having a degree of solubility in water (number of grams of an organic solvent which is melted in 100 g of water) equal to or higher than 3 g at 25°C is preferable. Examples of the water-miscible organic solvents include an alcohol solvent such as methanol, ethanol, propanol, butanol, and the like; a ketone solvent such as acetone, methylethyl ketone, and the like; a glycol ether solvent such as ethylene glycol monomethyl ether, ethylene glycol dimethyl ether, ethylene glycol monoethyl ether, ethylene glycol diethyl ether, ethylene glycol monopropyl ether, ethylene glycol monoisopropyl ether, monobutyl ether, diethylene glycol monomethyl ether, diethylene glycol dimethyl ether, diethylene glycol monoethyl ether, diethylene glycol diethyl ether, diethylene glycol monoisopropyl ether, diethylene glycol monobutyl ether, triethylene glycol monomethyl ether, triethylene glycol dimethyl ether, propylene glycol monomethyl ether, propylene glycol dimethyl ether, propylene glycol monopropyl ether, propylene glycol monobutyl ether, dipropylene glycol monomethyl ether, dipropylene glycol dimethyl ether, and the like; and the like. These water-miscible organic solvents may be used alone or in combination of two or more kinds thereof.

With the water-miscible organic solvents, if necessary, the other organic solvents may be used in combination thereof. For example, an aromatic hydrocarbon solvent such as toluene, xylene, and the like; an aliphatic hydrocarbon

solvent such as hexane, heptane, octane, decane, and the like; an ester solvent such as methyl acetate, ethyl acetate, isopropyl acetate, butyl acetate, amyl acetate, ethyl formate, butyl propionate, and the like; and the like may be exemplified. However, the use of these solvents is not preferable because a working environment deteriorates due to odor and the like. Even when the use of the solvents is necessary, it is preferable to use an amount thereof equal to or less than 1% relative to the total weight of the water-based resin composition. In addition, an example of a mixed aromatic hydrocarbon solvent among the aromatic hydrocarbon solvent includes a commercialized product such as Solvesso No. 100, Solvesso No. 150, and the like.

Examples of a radical polymerization initiator used in the synthesis of the acrylic resin (a) by the solution polymerization method and the like include azo compounds such as 2,2'-azobis(isobutyronitrile), 2,2'-azobis(2-methylbutyronitrile), azobis cyanovaleric acid, and the like; organic peroxides such as tert-butyl peroxypivalate, tert-butyl peroxybenzoate, tert-butyl peroxy-2-ethyl hexanoate, di-tert-butyl peroxide, cumene hydroperoxide, benzoyl peroxide, t-butyl hydroperoxide, and the like; inorganic peroxides such as hydrogen peroxide, ammonium persulfate, potassium persulfate, sodium persulfate, and the like. These initiators may be used alone or in combination of two or more kinds thereof. It is preferable to use the radical polymerization initiator within an amount in a range of 0.1 to 10 wt% relative to the total weight of components constituting the acrylic resin.

When the above-mentioned solution polymerization is carried out, nonvolatile contents in a reaction container is preferably 30 to 90 wt%, more preferably 50 to 80 wt%.

Examples of neutralizers (basic compound) used for neutralizing the carboxyl group in the acrylic resin (a) include alkyl amines such as monomethylamine, dimethylamine, trimethylamine, monoethylamine, diethylamine, triethylamine, monopropylamine, dipropylamine, tripropylamine, and the like; alkanolamines such as 5 monoethanolamine, diethanolamine, monoisopropanolamine, diisopropanolamine, N-methylethanolamine, N,N-dimethylethanolamine, N,N-diethylethanolamine, 2-amino-2-methylpropanol, 2-(dimethylamino)-2-methylpropanol, N-methyldiethanolamine, and the like; organic amines such as multivalent amines e.g. ethylenediamine, diethylenetriamine, triethylenetetramine, tetraethylenepentamine, and 0 the like; or ammonia (water). Among these basic compounds, ammonia water and trimethylamine are preferable because they are highly volatile and hard to maintain in a cured coating film and make it possible to obtain a cured coating film having excellent water resistance. The neutralizers (basic compounds) may be used alone or in combination of two or more kinds thereof.

In addition, for example, by adding ε-caprolactone and the like to the acrylic resin containing the carboxyl group, it is possible to obtain an acrylic resin having a structure composed of a repeating unit of the compound represented by general formula (1) and hydrogen atoms directly bonded thereto.

As for a number average molecular weight (Mn) of the acrylic resin (a) used in the present invention, 5,000 to 30,000 is preferable and 8,000 to 25,000 is more preferable because it makes it possible to obtain an active energy-ray-curable water-based resin composition or an active energy-ray-curable coating material which has excellent storage stability and viscosity which is not elevated.

As for the weight average molecular weight (Mw) of the acrylic resin (a) used in the present invention, 10,000 to 100,000 is preferable and 30,000 to 80,000 is more preferable because it makes it possible to obtain an active energy-ray-curable water-based resin composition or an active energy-ray-curable coating material which has excellent storage stability and viscosity which is not elevated.

In the present invention, measurement of the number average molecular weight and the weight average molecular weight of the acrylic resin (a) containing the carboxyl group was made by employing a gel permeation chromatograph under the following conditions in terms of polystyrene except for the component having a molecular weight equal to or lower than 1,000.

Measurement Appartus: HLC-8220 manufactured by Tosoh Corporation
Columns; Guard column HXL-H manufactured by Tosoh Corporation
+ TSKgel G5000HXL manufactured by Tosoh Corporation
+ TSKgel G4000HXL manufactured by Tosoh Corporation
+ TSKgel G3000HXL manufactured by Tosoh Corporation
+ TSKgel G2000HXL manufactured by Tosoh Corporation
Detector: RI (differential refractometer)
Data Processing: SC-8010 manufactured by Tosoh Corporation
Measurement Condition: Column temperature of 40°C

| | |
|---|---|
| Solvent | Tetrahydrofuran |
| Flow rate | 1.0 ml/min |

Standard: Polystyrene
Sample: 0.4 wt% of tetrahydrofuran solution in terms of a resin solid content filtered by a microfilter (100 μl).

A glass transition temperature of the acrylic resin (a) containing the carboxyl group used in the present invention is preferably 30˚C to 100˚C because it makes it possible to obtain an active energy-ray-curable water-based resin composition which provides a cured coating film having excellent wear resistance and substrate adhesiveness. For this reason, when the acrylic resin (a) is synthesized, it is preferable to suitably select and combine raw material components to have a glass transition temperature of 30˚C to 100˚C. In addition, the glass transition temperature is more preferably 60˚C to 90˚C because it makes it possible to obtain the cured coating film having excellent wear resistance and substrate adhesiveness.

The glass transition temperatures of the acrylic resin (a) and the like were determined by measuring differential scanning calorimeter (DSC) in accordance with JIS-K-7121.
Measurement Appartus: DSCQ-100 manufactured by TA Instruments
Container: Open Cell Made of Aluminum
Temperature Increasing Rate: 20˚C/min

In addition, the glass transition temperature of the acrylic resin (a) may be calculated according to the following formula. Moreover, the glass transition temperature of the following formula is the absolute temperature (˚K).

$$Tg^{-1} = \Sigma Xi \cdot Tg^{-1}$$

Herein, i = 1 to n, and n units of monomer components are copolymerized in the resin. Xi represents fraction by weight of the $i^{th}$ monomer, Tgi represents a glass transition temperature of a homopolymer of the $i^{th}$ monomer. As for the glass transition temperature of a homopolymer of the monomer, the value described in Polymer Handbook (4th Edition) written by J. Brandrup, E. H. Immergut, and E. A. Grulke (Wiley Interscience) may be used.

In addition, to prepare the acrylic resin (A), it is preferable to synthesize the acrylic resin (a) containing the carboxyl group and after that, neutralize the whole or a part of the carboxyl group with a basic compound. However, it is permissible to directly prepare the acrylic resin (A) without passing through the acrylic resin (a) by using a monomer which is obtained by neutralizing the whole or apart of an ethylenically unsaturated monomer containing a carboxyl group with a basic compound. The ethylenically unsaturated monomer is used for synthesizing the acrylic resin (a) containing a carboxyl group.

A compound (B) used in the present invention is required to have a polymerizable unsaturated double bond in an amount of 8.6 to 10.5 mmol/g. When the content of the polymerizable unsaturated double bond is less than 8.6 mmol/g, an active energy-ray-curable water-based resin composition or an active energy-ray-curable coating material of which cured coating film has insufficient wear resistance and water resistance because of a crosslinking insufficiency. Therefore, it is not preferable. When the content of the polymerizable unsaturated double bond exceeds 10.5 mmol/g, substrate adhesiveness of the cured coating film to be obtained is deteriorated. Therefore, it is not preferable. The compound (B) preferably has a polymerizable unsaturated double bond in an amount of 9.0 to 10.2 mmol/g and more preferably has a polymerizable unsaturated double bond in an amount of 9.0 to 9.8 mmol/g because it makes it possible to produce an active energy-ray-curable water-based resin composition or an active energy-ray-curable coating material which provides a cured coating film having excellent wear resistance, water resistance, and adhesiveness. In addition, the compounds (B) used in the present invention may be used alone or in combination of two or more kinds thereof. When two kinds or more are used in combination thereof, the compounds (B) are required to have the polymerizable unsaturated double bond in an amount of 8.6 to 10.5 mmol/g in average. Accordingly, even the compound having a polymerizable unsaturated double bond in an amount of less than 8.6 mmol/g or the compound having a polymerizable unsaturated double bond in an amount exceeding 10.5 mmol/g can be used as a raw material of the compound (B) by adding the other compounds to adjust the average concentration of the polymerizable unsaturated double bond be 8.6 to 10.5 mmol/g.

Examples of the compounds (B) having a polymerizable unsaturated double bond in an amount of 8.6 to 10.5 mmol/g used in the present invention include mono (meth)acrylates such as isobornyl (meth)acrylate (content of the polymerizable unsaturated double bond: 4.8 mmol/g), dicyclopentanyl (meth)acrylate (content of the polymerizable unsaturated double bond: 4.9 mmol/g), and the like;

di(meth)acrylates such as tripropylene glycol di(meth)acrylate (content of the polymerizable unsaturated double bond: 6.7 mmol/g), 1,6-hexane di(meth)acrylate (content of the polymerizable unsaturated double bond: 8.8 mmol/g), bisphenol A diglycidyl ether di(meth)acrylate (content of the polymerizable unsaturated double bond: 3.3 mmol/g), diethylene glycol di(meth)acrylate (content of the polymerizable unsaturated double bond: 9.3 mmol/g), hydroxypivalate neopentyl glycol di(meth)acrylate (content of the polymerizable unsaturated double bond: 6.4 mmol/g), neopentyl glycol di(meth)acrylate (content of the polymerizable unsaturated double bond: 9.4 mmol/g), 1,4-butanediol di(meth)acrylate (content of the polymerizable unsaturated double bond: 10.1 mmol/g), tricyclodecane dimethanol (meth)acrylate (content of the polymerizable unsaturated double bond: 6.6 mmol/g), polyethylene glycol di(meth)acrylate (for example, when a

number of a repeating unit of ethylene oxide is 9, a content of the polymerizable unsaturated double bond is 3.8 mmol/g and when the number of a repeating unit of ethylene oxide is 13, the content of the polymerizable unsaturated double bond is 2.9 mmol/g), polypropylene glycol di(meth)acrylate (for example, when the number of a repeating unit of propylene oxide is 7, a content of the polymerizable unsaturated double bond is 3.8 mmol/g), and the like;

tri(meth)acrylates such as trimethylolpropane tri(meth)acrylate (content of the polymerizable unsaturated double bond: 10.1 mmol/g), pentaerythritol tri(meth)acrylate (content of the polymerizable unsaturated double bond: 10.1 mmol/g), tris(2-(meth)acryloyloxyethyl)isocyanurate (content of the polymerizable unsaturated double bond: 5.6 mmol/g), ethylene oxide-modified trimethylolpropane tri(meth)acrylate (for example, when the number of ethylene oxide per molecule is 3, the content of the polymerizable unsaturated double bond is 7.0 mmol/g), and the like;

poly(meth)acrylates such as ditrimethylolpropane tetra(meth)acrylate (content of the polymerizable unsaturated double bond: 8.6 mmol/g), pentaerythritol tetra(meth)acrylate (content of the polymerizable unsaturated double bond: 11.4 mmol/g), dipentaerythritol penta(meth)acrylate (content of the polymerizable unsaturated double bond: 9.5 mmol/g), dipentaerythritol hexa(meth)acrylate (content of the polymerizable unsaturated double bond: 10.4 mmol/g), caprolactone-modified dipentaerythritol hexa(meth)acrylate (content of the polymerizable unsaturated double bond: 6.5 mmol/g), and the like; acryloylmorpholine (content of the polymerizable unsaturated double bond: 7.1 mmol/g); and the like.

In addition, examples of the compounds (B) include diisocyanate compounds such as tolylene diisocyanate, isophorone diisocyanate, hexamethylene diisocyanate, dicyclohexylmethane diisocyanate, norbornane diisocyanate, and the like; a isocyanate prepolymer obtained from such diisocyanate compounds and polyol; urethane (meth)acrylates produced by reacting a triisocyanate compound, which has a nurate body or a burette body and is obtained from such diisocyanate compounds, and (meth)acrylates containing hydroxyl group such as 2-hydroxyethyl (meth)acrylate, 2-hydroxypropyl (meth)acrylate, pentaerythritol penta(meth)acrylate, dipentaerythritol penta(meth)acrylate, and the like; and oligomers or prepolymers having a polymerizable unsaturated double bond, such as mono-, di-, tri-, or higher-polyester composed of polybasic acid and hydroxyalkyl (meth)acrylates, bisphenol A epoxy acrylates, novolak epoxy acrylates, and the like. When these compounds contain 8.6 to 10.5 mmol/g of the polymerizable unsaturated double bond, they may be used alone or in combination of two or more kinds thereof. In addition, in regard to the compound having a polymerizable unsaturated double bond, even the compound having a polymerizable unsaturated double bond in an amount of less than 8.6 mmol/g or the compound having a polymerizable unsaturated double bond in an amount exceeding 10.5 mmol/g can be used in combination of other compounds having a polymerizable unsaturated double bond to have the average content of the polymerizable unsaturated double bond as 8.6 to 10.5 mmol/g.

The above-mentioned compounds (B) may be used respectively alone or in combination of two or more kinds thereof.

As for the compounds (B) used in the present invention, dipentaerythritol hexa (meth)acrylate is preferable and a mixture containing dipentaerythritol hexa (meth)acrylate and urethane (meth)acrylate is more preferable because it makes it possible to produce an active energy-ray-curable water-based resin composition or an active energy-ray-curable coating material which provides a cured coating film having excellent wear resistance. Among the mixtures, the mixture which contains urethane (meth)acrylate having a polymerizable unsaturated double bond in an amount of 5.5 to 9.5 mmol/g is preferable. Moreover, the average concentration of the polymerizable unsaturated double bond in the mixture is preferably 9.0 to 10.2 mmol/g.

For the active energy-ray-curable water-based resin composition of the present invention, the ratio ((B)/(A)) of the content of the compound (B) to that of the acrylic resin (A) is required to be in the range of 1.5 to 6 in terms of weight. When the content ratio ((B)/(A)) is lower than 1.5, the cured coating film has insufficient wear resistance and water resistance. Therefore, it is not preferable. When the content ratio ((B)/(A)) is greater than 6, the cured coating film has insufficient storage stability. Therefore, it is not preferable. The content ratio ((B)/(A)) is preferably 1.8 to 4 and more preferably 2 to 3.5.

The method of preparing the active energy-ray-curable water-based resin composition of the present invention is not particularly limited, but, for example, may be exemplified using the following methods.

(1) A method in which a resin (A) prepared by neutralizing a carboxyl group in an acrylic resin (a), and a compound (B) are melted in a water-miscible organic solvent to obtain a solution, the solution is mixed with water, the resin (A) is melted in an aqueous medium containing the water-miscible organic solvent, and the compound (B) is dispersed in the aqueous medium (resin aqueous solution) in which the resin (A) is melted.

(2) A method in which a resin (A) prepared by neutralizing a carboxyl group in an acrylic resin (a), and a compound (B) are mixed with an aqueous medium containing a water-miscible organic solvent, the resin (A) is melted in the aqueous medium, and the compound (B) is dispersed in the aqueous medium (resin aqueous solution) in which the

resin (A) is melted.

(3) A method in which an acrylic resin (a) and a compound (B) are melted in a water-miscible organic solvent to obtain a solution; the solution is mixed with a basic compound to carry out a neutralization of a carboxyl group in the acrylic resin (a) thereby obtaining an acrylic resin (A); the solution of the water-miscible organic solvent in which the acrylic resin (A) and the compound (B) having a polymerizable unsaturated double bond are contained is mixed with water; the resin (A) is melted in an aqueous medium, and the compound (B) is dispersed in the aqueous medium (resin aqueous solution) in which the acrylic resin (A) is melted.

(4) A method in which an acrylic resin (a) and a compound (B) are melted in a water-miscible organic solvent to obtain a solution; the solution is mixed with water which contains a basic compound to carry out a neutralization of a carboxyl group in the acrylic resin (a) by the basic compound; the resin (A) is melted in an aqueous medium, and the compound (B) is dispersed in the aqueous medium (resin aqueous solution) in which the resin (A) is melted.

When the method (1) or (3) is employed among the above-mentioned methods, an active energy-ray-curable water-based resin composition can be readily obtained. Therefore, it is preferable. In addition, it is unnecessary to simultaneously carry out a dissolving of the acrylic resin (a) or the acrylic resin (A), and the compound (B) in the water-miscible organic solvent. For example, it is permissible to melt the acrylic resin (a) or the acrylic resin (A) in the water-miscible organic solvent and then mix the compound (B) with the solution to disperse the compound (B). Moreover, after obtaining an active energy-ray-curable water-based resin composition prepared by dispersing the compound (B) in a resin solution where the acrylic resin (A) prepared by neutralizing the carboxyl group in the acrylic resin (a) is melted in water as mentioned above, if necessary, the whole or a part of the water-miscible organic solvent may be removed. However, the active energy-ray-curable water-based resin composition or the active energy-ray-curable coating material of the present invention can contain the organic solvent in an amount equal to or lower than 1/10 of the known spray coating conditions without intentionally removing the organic solvent. Accordingly, problems in that a working environment is deteriorated, air pollution is caused by volatilized organic solvent, and the like hardly arise.

In the active energy-ray-curable water-based resin composition of the present invention, a photo (polymerization) initiator is generally contained. As for the photo (polymerization) initiator, various initiators, for example, acetophenones, benzophenone derivatives, Michler's ketone, benzine, benzyl derivatives, benzoin derivatives, benzoin methyl ethers, $\alpha$-acyloxime ester, thioxanthones, anthraquinones and various derivatives thereof such as 4-dimethylamino benzoic acid, 4-dimethylamino benzoic acid ester, alkoxy acetophenone, benzyl dimethyl ketal, benzophenone, benzoyl benzoic acid alkyl, bis(4-dialkyl aminophenyl) ketone, benzyl, benzoin, benzoin benzoate, benzoin alkyl ether, 2-hydroxy-2-methylpropiophenone, 1-hydroxycyclohexyl phenyl ketone, 4-(2-hydroxyethoxy)phenyl-2-hydroxy-2-propylketone, 2-hydroxy-2-methyl-1-phenylpropane-1-one, thioxanthone, 2,4,6-trimethyl benzoyl diphenoyl phosphine oxide, 2-methyl-1-[4-(methylthio)phenyl]-2-morpholinopropan-1-one, 2-benzyl-2-dimethylamino-1-(4-morpholinophenyl)-butanone-1-one, and the like, may be used. These may be used alone or in combination of two or more kinds thereof. In addition, the photo (polymerization) initiator is generally oily. However, the initiator becomes stably dispersed in water.

The photo (polymerization) initiator may be added in an amount of 0.05 to 20% by weight and preferably be added in an amount of 0.5 to 10% by weight with respect to the solid content of the active energy-ray-curable water-based resin composition of the present invention.

In addition to the photo (polymerization) initiator, various photosensitizers may be used in combination. Examples of the photosensitizers include amines, ureas, sulfur-containing compounds, phosphorus-containing compounds, chlorine-containing compounds, nitriles or other nitrogen-containing compounds, or the like.

The active energy-ray-curable water-based resin composition of the present invention is prepared by dispersing the compound (B) in a resin solution where the acrylic resin (A) is melted in water. The ratio ((B)/(A)) of the content of the compound (B) to that of the acrylic resin (A) in the composition may be 1.5 to 6 in terms of weight. A part of the acrylic resin (A) may be in a state of being melted in water and a part of the compound (B) may be in a state of being melted in water.

For the active energy-ray-curable water-based resin composition of the present invention, if necessary, an emulsifying agent may be used within the range which does not impair the curing of the present invention. By using the emulsifying agent, dispersion stability of the acrylic resin (A) and the compound (B) in water may be improved.

Examples of the emulsifying agents include nonionic emulsifying agents such as polyoxyethylene alkyl ether, polyoxyethylene alkyl phenyl ether, and the like; anionic emulsifying agents such as alkyl sulfuric acid ester salt, alkylbenzene sulfate, polyoxyethylene alkyl ether sulfuric acid ester salt, and the like; and cationic emulsifying agents such as quaternary ammonium salt and the like. It is preferable to use as small amount of emulsifying agents as possible, and more preferable to use no emulsifying agents in order not to deteriorate water resistance of the cured coating film.

In the preparation of the active energy-ray-curable water-based resin composition of the present invention, as for a mechanical means for dissolving and dispersing the acrylic resin (a), the acrylic resin (A), and the compound (B) in the water-miscible organic solvent and the like, various means can be employed. For example, a mix-dissolving and/or dispersing method using a turbine blade, a Maxblend blade, a Hi-F mixer, and the like as a stirring blade; or a mix-dissolving and/or dispersing method using a homogenizer, a sonolator, a disper, a mixer, and the like is employed.

The active energy-ray-curable coating material of the present invention contains the active energy-ray-curable water-based resin composition of the present invention. The active energy-ray-curable coating material of the present invention may be obtained, for example, by mixing the active energy-ray-curable water-based resin composition of the present invention and the photoinitiator, and if necessary, a leveling agent, a defoaming agent, a rheology controlling agent, or the like.

Examples of the leveling agents include silicone leveling agents such as polyether-modified polymethylsiloxane, polyether-modified polymethylsiloxane having an acryloyl group, or the like; an acrylic leveling agent; or the like. Examples of the defoaming agents include a silicone defoaming agent, a mineral oil defoaming agent, a polymer defoaming agent, and the like. Examples of the rheology controlling agents include an alkali swollen rheology controlling agent, an alkali swollen-assembly rheology controlling agent, a urethane assembly rheology controlling agent, and the like. If necessary, these may be suitably selected to be used.

In addition, in the active energy-ray-curable coating material of the present invention, if necessary, an emulsified product of the compound having the polymerizable unsaturated double bond; an emulsified product of a urethane resin, an epoxy resin, and the like; a self-emulsified product; a water-soluble resin; or the like may be mixed.

The method of forming a cured coating film of the present invention includes coating a substrate with the active energy-ray-curable coating material of the present invention and curing the coated active energy-ray-curable coating material by irradiating an actinic energy ray. The coating may be carried out, for example, according to coating methods such as a gravia coating method, a roll coating method, a spray coating method, a lip coating method, a comma coating method, a spin coating method, a dipping coating method, and the like; and printing methods such as a gravure printing method, a screen printing method, and the like. Examples of the substrates include plastics, metal or a surface of evaporation coating metal, glasses, woods, papers, and the like.

Examples of the plastics include a copolymer of acryl butylene styrene (ABS), polycarbonate (PC), polymethyl methacrylate (PMMA), polyethylene terephthalate (PET), polybutylene terephthalate (PBT), cellulose triacetate (TAC), or the like; or a complex thereof. Examples of the metals include aluminum, stainless steel, tin, tinplate, and the like.

As for the above-mentioned substrate, the substrate may have a cured coating film prepared by coating the active energy-ray-curable coating material of the present invention in advance and curing the coated active energy-ray-curable coating material by irradiating an actinic energy ray; and may have a cured coating film prepared by coating a coating material other than the active energy-ray-curable coating material of the present invention and drying the coating material if necessary, and then curing the coating material,

Further, the substrate may have various shapes. For example, the substrate may be in a shape having a certain thickness, a sheet shape, a film shape, or the like. Moreover, the substrate may be treated to have designs such as concave-convex shape and the like on the surface thereof.

A method of forming the cured coating film of the present invention may be exemplified by a forming method including the following processes and the like. First, the active energy-ray-curable coating material of the present invention is coated on the substrate. After that, the substrate is subjected to a pre-drying. The pre-drying is carried out, for example, by statically placing the substrate under the condition of 50 to 100˚C for 1 to 30 minutes. After that, the substrate is irradiated with an actinic energy ray. When the substrate is plastic, for example, the pre-drying is carried out at 70˚C for about 5 minutes.

Examples of the actinic energy rays include an electron ray, an ultraviolet ray, a gamma ray, and the like. Although the conditions of the actinic energy ray irradiation are determined according to a composition of the active energy-ray-curable coating material, it is preferable to irradiate to the ray, so that the integrated light quantity is 50 to 5,000 $mj/cm^2$ and more preferable to irradiate the ray, so that the integrated light quantity of 200 to 3,000 $mj/cm^2$.

To repair a floor in a house according to the method of forming the cured coating film of the present invention, for example, the active energy-ray-curable coating material of the present invention is coated on the floor and dried by using an electric fan, and then the floor is irradiated with an ultraviolet ray by using a portable ultraviolet ray-irradiating apparatus to cure the coating film.

In the active energy-ray-curable water-based resin composition or the active energy-ray-curable coating material of the present invention, a water-miscible organic solvent may be suitably contained according to a coating performance of a spray coating or the like. In addition, the content ratio of the solid content in the total of the acrylic resin (A) and the compound (B) in the active energy-ray-curable water-based resin composition or the active energy-ray-curable coating material of the present invention is preferably 10 to 70% by weight, and more preferably 20 to 50% by weight because the viscosity is suitable so that it is easy to handle as a coating material.

The article in which the cured coating film of the active energy-ray-curable coating material of the present invention is provided has the cured coating film having excellent wear resistance and water resistance. The cured coating film may be provided on the surface of the article, or provided on the article as a base coating or a second coating. Even the cured coating film is provided on the article as a base coating or a second coating, it provides abrasion resistance or water resistance of the cured coating film to the surface so that the life span of the article can be increased. In addition, when the base coating is formed on the substrate, the substrate can be protected from being scratched during the subsequent processes.

Examples

The present invention will be specifically described below with reference to Synthesis Examples, Examples, and Comparative Examples. The terms "parts" and "%" used in each example are based on weight unless otherwise specified.

Synthesis Example 1 (Synthesis of Acrylic Resin (A))

Into 1 liter of a reaction vessel equipped with a reflux condenser, a stirrer, and a nitrogen introducing tube, 280 g of propylene glycol monopropyl ether was introduced while being stirred and was heated to 120˚C. A monomer compound composed of 434 g of methyl methacrylate, 21 g of butyl methacrylate, 84 g of acrylic acid, 105 g of hydroxyl ethyl methacrylate, and 35.0 g of Aronix M-5300 (manufactured by Toagosei Chemical Industry Co., Ltd., ω-carboxy-polycaprolactone acrylate), and an initiator solution prepared by dissolving 12.6 g of tert-butyl peroxy-2-ethylhexanoate in 20 g of propylene glycol monopropyl ether were added together for 4 hours. The polymerization reaction was further continued at the same temperature and after 8 hours, the reaction was stopped to obtain an acrylic resin (a-1) solution. The resin solid content of the acrylic resin (a-1) had an acid value of 102 mgKOH/g, a hydroxyl value of 64 mgKOH/g, a number average molecular weight of 15,000, a weight average molecular weight of 45,000, and a glass transition temperature of 72˚C. After that, 38.9 g of triethylamine and 61.1 g of 25% ammonia water were added to the solution, the neutralization was carried out, and the solution was adjusted using propylene glycol monopropyl ether to obtain an acrylic resin (A-1) solution. The acrylic resin (A-1) solution had a nonvolatile content of 70% and 1.83 mmol/g of a neutralized carboxyl group. These characteristic values of the acrylic resin (A-1) are shown in Table 1 along with property values of the acrylic resin (a-1).

Synthesis Examples 2 to 9 (same as above)

An acrylic resin (A-2) solution and an acrylic resin (A-9) solution were obtained according to Synthesis Example 1 by using the monomer compound and the polymerization initiator in an amount shown in Table 1. The characteristic values of the acrylic resin (A-2) and the acrylic resin (A-9) are shown in Tables 1 and 2 along with the property values of the acrylic resin (a-1) to the acrylic resin (a-9).

Synthesis Examples 10 to 15 (Synthesis of Acrylic Resin (a) for Comparison)

An acrylic resin solution for comparison (A'-1) to an acrylic resin solution for comparision (A'-6) were obtained according to Synthesis Example 1 by using the monomer compound and the polymerization initiator in an amount shown in Table 1. The characteristic values of the acrylic resin (a'-1) and the acrylic resin (a'-6) are shown in Table 3.

Synthesis Example 16 (Synthesis of Compound (B))

Into 1 liter of a reaction vessel equipped with a stirrer, 104 g of hexamethylene diisocyanate, 0.2 g of methoxone, and 0.2 g of dibutyltin dilaurylate were introduced while being stirred and heated to 60˚C. At the same temperature, 645 g of Aronix M305 (manufactured by Toagosei Chemical Industry Co., Ltd., pentaerythritol triacrylate/pentaerythritol tetraacrylate with a hydroxyl value of 110 mgKOH/g) was introduced to the vessel in 10 divided doses every 10 minutes. The reaction was continued for further 10 hours. After confirming that the absorption an infrared spectrum of 2,250 $cm^{-1}$ of an isocyanate group was disappeared, the reaction was stopped to obtain a compound (BB-1) which is a mixture of urethane acrylate (content of a polymerizable unsaturated double bond: 7.8 mmol/g) and pentaerythritol tetraacrylate. The concentration of polymerizable unsaturated double bonds of the compound (BB-1) was 9.0 mmol/g.

Synthesis Example 17 (same as above)

Into 1 liter of a reaction vessel equipped with a stirrer, 128 g of isophorone diisocyanate, 0.2 g of methoxone, and 0.2 g of dibutyltin dilaurylate were introduced while being stirred and heated to 60˚C. At the same temperature, 621 g of Aronix M305 was introduced to the vessel in 10 divided doses at every 10 minutes. The reaction was continued for further 10 hours. After confirming that the absorption of an infrared spectrum of 2,250 $cm^{-1}$ of an isocyanate group was disappeared, the reaction was stopped to obtain a compound (BB-2) which was a mixture of urethane acrylate (content of a polymerizable unsaturated double bond: 7.3 mmol/g) and pentaerythritol tetraacrylate. The concentration of polymerizable unsaturated double bonds of the compound (BB-2) was 8.6 mmol/g.

Synthesis Example 18 (Synthesis of Compound (B))

Into 1 liter of a reaction vessel equipped with a stirrer, 250 g of Lumicure DPA600 (manufactured by Dainippon Ink and Chemicals Incorporate, dipentaerythritol pentaacrylate/dipentaerythritol hexaacrylate with a hydroxyl value of 50 mgKOH/g), 50 g of Lumicure DTA400 (manufactured by Dainippon Ink and Chemicals Incorporate, ditrimethylol propane tetraacrylate), and 200 g of the compound (BB-1) were introduced and stirred at 40˚C to obtain a compound (B-1). The concentration of polymerizable unsaturated double bonds of the compound (B-1) was 9.5 mmol/g.

Synthesis Example 19 (same as above)

Into 1 liter of a reaction vessel equipped with a stirrer, 450 g of Lumicure DPA600 and 50 g of the compound (BB-1) were introduced and stirred at 40˚C to obtain a compound (B-2). The concentration of polymerizable unsaturated double bonds of the compound (B-2) was 10.0 mmol/g.

Synthesis Example 20 (same as above)

Into 1 liter of a reaction vessel equipped with a stirrer, 150 g of Lumicure DPA600, 75 g of Aronix M350 (manufactured by Toagosei Chemical Industry Co., Ltd., ethylene oxide-modified trimethylolpropane triacrylate), and 275 g of the compound (BB-2) were introduced and stirred at 40˚C to obtain a compound (B-3). The concentration of polymerizable unsaturated double bonds of the compound (B-3) was 8.8 mmol/g.

Synthesis Example 21 (same as above)

Into 1 liter of a reaction vessel equipped with a stirrer, 225 g of Lumicure DPA620 (manufactured by Dainippon Ink and Chemicals Incorporate, dipentaerythritol pentaacrylate/dipentaerythritol hexaacrylate with a hydroxyl value of 25 mgKOH/g), 250 g of Aronix M305, and 25 g of the compound (BB-1) were introduced and stirred at 40˚C to obtain a compound (B-4). The concentration of polymerizable unsaturated double bonds of the compound (B-4) was 10.4 mmol/g.

Synthesis Example 22 (Synthesis of Compound (B) for Comparison)

Into 1 liter of a reaction vessel equipped with a stirrer, 75 g of Lumicure DPA600, 150 g of Aronix M309, and 275 g of the compound (BB-2) were introduced and stirred at 40˚C to obtain a compound (b-1). The concentration of polymerizable unsaturated double bonds of the compound (b-1) was 8.4 mmol/g.

Synthesis Example 23 (same as above)

Into 1 liter of a reaction vessel equipped with a stirrer, 75 g of Lumicure DPA620 and 425 g ofAronix M305 were introduced and stirred at 40˚C to obtain a compound (b-2). The concentration of polymerizable unsaturated double bonds of the compound (b-2) was 10.6 mmol/g.

Example 1

Into 1 liter of a reaction vessel equipped with a stirrer, 97 parts of the acrylic resin (A-1) solution obtained from Synthesis Example 1 and 147 g of urethane acrylate (B-1) obtained from Synthesis Example 8 were introduced while being stirred and the mixture was heated to 70˚C and stir-mixed. After that, while stirring the mixture at 40˚C, 340 g of ion-exchange water was introduced to the mixture in 10 divided doses. After that, 10.5 g of Irgacure 500 (photopolymerization initiator manufactured by Ciba Specialty Chemicals) and 2.1 g of silicone leveling agent (BYK-333 manufactured

by BYK) were added and mixed. The mixture was adjusted to an active energy-ray-curable water-based resin composition 1 having nonvolatile content of 35% and pH value of 7.8 by using ion-exchange water. The average particle size of the active energy-ray-curable water-based resin composition 1 was 320 nm.

In addition, the average particle size of the active energy-ray-curable water-based resin composition 1 was measured by using NANOTRAC 150 manufactured by MICROTRAC Co. (same as below).

The pH value of the active energy-ray-curable water-based resin composition 1 was measured using an electrode type 9621C pH meter D-51,manufactured by Horiba Co., Ltd. (same as below).

The storage stability of the obtained active energy-ray-curable water-based resin composition 1 and an appearance evaluation, wear resistance, pencil hardness, substrate adhesiveness, and hot-water resistance of the cured coating film were evaluated. A method of forming the cured coating film and evaluation methods of each test will be shown below.

Method of Forming Cured Coating Film (Test Coating Plate)

On a PMMA (polymethyl methacrylate) plate, a spray coating was carried out to have a film thickness of 10 μm after drying. The plate was pre-dried in a drying machine at 70˚C for 10 minutes. After that, the plate was irradiated with an ultraviolet ray of 1,000 $mJ/cm^2$ by using a high-pressure mercury lamp of 80 W/cm to prepare a test coating plate. In addition, an adhesion test, a hot-water resistance/adhesion test, and a water resistance test were carried out by forming and using test coating plates having ABS (acryl butylene styrene copolymer) and PC (polycarbonate) as a substrate.

Storage stability test: In a 200 ml of a glass container, the sealed active energy-ray-curable water-based resin composition 1 was left standing at 40˚C and the appearance evaluation was performed by visual evaluation.

◎: No separation and precipitation was found for over 2 months
○: No separation and precipitation was found for over 1 month
Δ: Separation and precipitation was found for 1 week to less than 1 month
×: Separation and precipitation was found for less than 1 week

Appearance evaluation: An appearance of the test coating plate was evaluated in visual.

◎: Smooth and no holes were found
○: Smooth but few holes were found
Δ: Slight irregularities were shown
×: Great irregularities were shown

Wear resistance test: In accordance with JIS-K5600-5-10, a reciprocating friction was performed on the coated surfaces of the test coating plateusing No. 0000 steel wool which is applied with 1 Kg of load for 50 times of. After that, a haze value on the tested part was measured to determine the wear resistance. In addition, for the measurement of the haze vale, DIGITAL HAZE COMPUTER manufactured by Suga Test Instruments Co., Ltd. was used.

◎: Less than 3.5
○: Equal to or more than 3.5 and less than 5.0
Δ: Equal to or more than 5.0 and less than 15.0
×: Equal to or more than 15.0

Pencil hardness test: The hardness of the coated surfaces of the test coating plate whether scratch occurs or not was examined in accordance with JIS-K-5400 by using a high class pencil prescribed in JIS-S-6006.

Adhesion test: In accordance with JIS-K5600-5-6, on the coated surfaces of the test coating plates (test coating plates using PMMA, ABS, and PC as a substrate), a grid was carved to have 1 mm of width and 100 masses were made. After that, an exfoliation test was carried out by using a cellophane adhesive tape, and adhesiveness was determined by the numbers of retained grid.

◎: 100 grids on all the test coating plates
○: Equal to or more than 80 grids on all the test coating plates and 100 grids on one or two test coating plates
Δ: 80 to 99 grids on all the test coating plates
×: not more than 79 grids on some test coating plates

Hot-water resistance/adhesiveness: The test coating plates (test coating plates using PMMA, ABS, and PC

as a substrate) was dipped into hot-water of 70˚C for 5 hours. After that, the above-mentioned adhesion test was carried out.

◎: 100 grids on all the test coating plates
○: Equal to or more than 80 grids on all the test coating plates and 100 grids on one or two test coating plates
Δ: 80 to 99 grids on all the test coating plates
×: not more than 79 grids on some test coating plates

Water resistance test: The test coating plates (test coating plates using PMMA, ABS, and PC as a substrate) was dipped into hot-water of 40˚C for 24 hours. After that, whitened state of the coated surface was measured by visual evaluation.

◎: No changes on all the test coating plates after 72 hours
○: No changes on all the test coating plates after 24 hours but partial whitening or sulk was found on at least one coating plate after 72 hours
Δ: Partial whitening or sulk was found on all the coating plates after 24 hours
×: Whitening or sulk was found on all surfaces of all the coating plates after 24 hours

Examples 2 to 4 and Comparative Examples 1 to 10

Active energy-ray-curable water-based resin compositions 2 to 10 and active energy-ray-curable water-based resin compositions for comparison 1' to 10' were obtained according to a method in Example 1 by using raw material compositions shown in Table 2. In each Example, tests were carried out in the same manner as in Example 1, the evaluation results are shown in Tables 8 to 11.

[Table 1]

| | Synthesis Examples | | | | |
|---|---|---|---|---|---|
| | 1 | 2 | 3 | 4 | 5 |
| Acrylic resin (A) | A-1 | A-2 | A-3 | A-4 | A-5 |
| Monomer Mixture | | | | | |
| MMA | 434 | 434 | 434 | 388.5 | 486.5 |
| BMA | 21 | 36.4 | 18.9 | 89.6 | |
| EA | | 14 | 14 | 18.9 | |
| BA | 21 | | | | 10.5 |
| 2EHA | | | | | 21 |
| AA | 84 | 87.5 | 66.5 | 84 | 84 |
| MAA | | | | | |
| M-5300 | 35 | 16.1 | 103.6 | 35 | 35 |
| HEA | | | | | 63 |
| HEMA FM-1 | 105 | 112 | 63 | 84 | |
| Initiator | 12.6 | 9.8 | 12.6 | 14.0 | 15.4 |
| Triethylamine | 38.9 | 38.4 | 64.1 | 25.9 | 64.8 |
| 25% ammonia water | 61.1 | 60.4 | 43.1 | 69.8 | 43.6 |
| Used amount (%) of radical polymerizable monomer represented by the general formula (1) | 5 | 2.3 | 14.8 | 5 | 5 |
| Used amount (%) of methyl methacrylate | 62 | 62 | 62 | 55.5 | 69.5 |
| Amount of neutralized carboxyl group (mmol/g) | 1.83 | 1.81 | 1.81 | 1.83 | 1.83 |

(continued)

| Property values of acrylic resin (a) used in preparation of acrylic resin (A) | | | | | |
|---|---|---|---|---|---|
| Acrylic resin (a) | a-1 | a-2 | a-3 | a-4 | a-5 |
| Number average molecular weight | 15000 | 16000 | 17000 | 13000 | 11000 |
| Weight average molecular weight | 45000 | 62000 | 55000 | 38000 | 32000 |
| Nonvolatile content (%) | 65 | 65 | 65 | 65 | 65 |
| Acid value of solid content | 102 | 101 | 101 | 102 | 102 |
| Hydroxyl value of solid content | 64 | 69 | 38 | 51 | 43 |
| Glass transition temperature (˚C) | 72 | 76 | 64 | 67 | 60 |

[Table 2]

| | Synthesis Examples | | | |
|---|---|---|---|---|
| | 6 | 7 | 8 | 9 |
| Acrylic resin | A-6 | A-7 | A-8 | A-9 |
| Monomer Mixture | | | | |
| MMA | 434 | 434 | 462 | 434 |
| BMA | 87.5 | 31.5 | 7 | |
| EA | | | | |
| BA | 10.5 | | | |
| 2EHA | | 14 | | |
| AA | 63 | 115.5 | 70 | 84 |
| MAA | | | | |
| M-5300 | 35 | 35 | 84 | 35 |
| HEA | | | | |
| HEMA | 70 | 70 | 28 | 105 |
| FM-1 | | | 14 | 42 |
| Initiator | 12.6 | 8.4 | 12.6 | 11.2 |
| Triethylamine | 50.1 | 0 | 37.9 | 38.9 |
| 25% ammonia water | 33.7 | 117 | 59.6 | 61.1 |
| Used amount (%) of radical polymerizable monomer represented by the general formula (1) | 5 | 5 | 12 | 5 |
| Used amount (%) of methyl methacrylate | 62 | 62 | 66 | 62 |
| Amount of neutralized carboxyl group (mmol/g) | 1.42 | 2.46 | 2.37 | 1.83 |
| Property values of acrylic resin (a) used in preparation of acrylic resin (A) | | | | |
| Acrylic resin (a) | a-6 | a-7 | a-8 | a-9 |
| Number average molecular weight | 13000 | 18000 | 16000 | 15000 |
| Weight average molecular weight | 42000 | 75000 | 55000 | 56000 |
| Nonvolatile content (%) | 65 | 65 | 65 | 65 |
| Acid value of solid content | 79 | 137 | 133 | 102 |
| Hydroxyl value of solid content | 43 | 48 | 22 | 78 |
| Glass transition temperature (˚C) | 69 | 74 | 72 | 73 |

[Table 3]

| | Synthesis Examples | | | | | |
|---|---|---|---|---|---|---|
| | 10 | 11 | 12 | 13 | 14 | 15 |
| Acrylic resin | A'-1 | A'-2 | A'-3 | A'-4 | A'-5 | A'-6 |
| Monomer Mixture | | | | | | |
| MMA | 434 | 434 | 381.5 | 493.5 | 434 | 434 |
| BMA | 32.9 | 28 | 66.5 | 7 | 55.3 | 14 |
| EA | 28 | | | | | |
| BA | | 28 | 28 | | 14 | 7 |
| 2EHA | | | | | | |
| AA | 87.5 | 66.5 | 84 | 84 | 56.7 | 140 |
| MAA | | | | | | |
| M-5300 | 12.6 | 108.5 | 35 | 35 | 35 | 35 |
| HEA | | | | | | |
| HEMA | 105 | 35 | 105 | 80.5 | 105 | 70 |
| FM-1 | | | | | | |
| Initiator | 12.6 | 12.6 | 14.0 | 12.6 | 12.6 | 12.6 |
| Triethylamine | 38.1 | 38.9 | 38.9 | 38.9 | 27.4 | 62.5 |
| 25% ammonia water | 59.8 | 61.2 | 61.1 | 61.1 | 43.0 | 98.1 |
| Used amount (%) of radical polymerizable monomer represented by the general formula (1) | 1.8 | 15.5 | 5 | 5 | 5 | 5 |
| Used amount (%) of methyl methacrylate | 62 | 62 | 54.5 | 70.5 | 62 | 62 |
| Amount of neutralized carboxyl group (mmol/g) | 1.8 | 1.84 | 1.83 | 1.83 | 1.29 | 2.94 |
| Used Amount (%) of radical polymerizable monomer represented by the general formula (1) | 1.8 | 15.5 | 5 | 5 | 5 | 5 |
| Property values of acrylic resin (a') used in preparation of acrylic resin (A') | | | | | | |
| Acrylic resin (a') | a'-1 | a'-2 | a'-3 | a'-4 | a'-5 | a'-6 |
| Number average molecular weight | 13000 | 16000 | 13000 | 15000 | 15000 | 15000 |
| Weight average molecular weight | 41000 | 56000 | 39000 | 45000 | 51000 | 45000 |
| Nonvolatile content (%) | 65 | 65 | 65 | 65 | 65 | 60 |
| Acid value of solid content | 100 | 103 | 102 | 102 | 72 | 165 |
| Hydroxyl value of solid content | 73 | 30 | 73 | 49 | 69 | 45 |
| Glass transition temperature (˚C) | 75 | 58 | 68 | 81 | 73 | 77 |

Footnote for Table 1
MMA: Methyl methacrylate
BMA: Butyl methacrylate
EA: Ethyl acrylate
BA : Butyl acrylate
2EHA : 2-ethylhexyl acrylate
AA: Acrylic acid
MAA: Methacylic acid
HEA: Hydroxyethyl acrylate
HEMA: Hydroxyethyl methacrylate
M-5300: Aronix M-5300 (manufactured by Toagosei Chemical Industry Co., Ltd., ω-carboxy-polycaprolactone acrylate)
FM-1: Plaxel FM-1 (manufactured by Daicel Chemical Industries, Ltd., 1 mol adduct of caprolactone and hydroxyethyl

methacrylate)

[Table 4]

| | Examples | | | | | | | | |
|---|---|---|---|---|---|---|---|---|---|
| | 1 | 2 | 3 | 4 | 5 | 6 | 7 | 8 | 9 |
| Compositions | 1 | 2 | 3 | 4 | 5 | 6 | 7 | 8 | 9 |
| A-1 solution | 97 | | | | | | | | |
| A-2 solution | | 97 | | | | | | | |
| A-3 solution | | | 97 | | | | | | |
| A-4 solution | | | | 97 | | | | | |
| A-5 solution | | | | | 97 | | | | |
| A-6 solution | | | | | | 97 | | | |
| A-7 solution | | | | | | | 97 | | |
| A-8 solution | | | | | | | | 97 | |
| A-9 solution | | | | | | | | | 97 |
| B-1 | 147 | 147 | 147 | 147 | 147 | 147 | 147 | 147 | 147 |
| B-2 | | | | | | | | | |
| B-3 | | | | | | | | | |
| B-4 | | | | | | | | | |
| Ion-exchange water | 340 | 340 | 340 | 340 | 340 | 340 | 340 | 340 | 340 |
| Irgacure 500 | 10.5 | 10.5 | 10.5 | 10.5 | 10.5 | 10.5 | 10.5 | 10.5 | 10.5 |
| Silicone leveling agent | 2.1 | 2.1 | 2.1 | 2.1 | 2.1 | 2.1 | 2.1 | 2.1 | 2.1 |
| Nonvolatile content (%) | 35 | 35 | 36 | 34 | 35 | 35 | 34 | 35 | 36 |
| PH | 7.8 | 7.7 | 7.4 | 8.1 | 8.1 | 7.5 | 7.6 | 7.2 | 8.1 |
| Average particle size (nm) | 320 | 340 | 390 | 330 | 350 | 420 | 310 | 340 | 360 |
| (B)/(A) | 2.3 | 2.3 | 2.3 | 2.3 | 2.3 | 2.3 | 2.3 | 2.3 | 2.3 |

[Table 5]

| | Examples | | | | |
|---|---|---|---|---|---|
| | 10 | 11 | 12 | 13 | 14 |
| Compositions | 10 | 11 | 12 | 13 | 14 |
| A-1 solution | 97 | 97 | 97 | 122.8 | 48.5 |
| A-2 solution | | | | | |
| A-3 solution | | | | | |
| A-4 solution | | | | | |
| A-5 solution | | | | | |
| A-6 solution | | | | | |
| A-7 solution | | | | | |

(continued)

| | Examples | | | | |
|---|---|---|---|---|---|
| | 10 | 11 | 12 | 13 | 14 |
| Compositions | 10 | 11 | 12 | 13 | 14 |
| A-8 solution | | | | | |
| A-9 solution | | | | | |
| B-1 | | | | 130.2 | 178.5 |
| B-2 | 147 | | | | |
| B-3 | | 147 | | | |
| B-4 | | | 147 | | |
| Ion-exchange water | 340 | 340 | 340 | 330 | 360 |
| Irgacure 500 | 10.5 | 10.5 | 10.5 | 10.5 | 10.5 |
| Silicone leveling agent | 2.1 | 2.1 | 2.1 | 2.1 | 2.1 |
| Nonvolatile content (%) | 35 | 35 | 35 | 36 | 34 |
| PH | 7.6 | 7.3 | 7.2 | 8.9 | 7.1 |
| Average particle size (nm) | 340 | 310 | 340 | 220 | 480 |
| (B)/(A) | 2.3 | 2.3 | 2.3 | 1.6 | 5.7 |

[Table 6]

| | Comparative Examples | | | | | |
|---|---|---|---|---|---|---|
| | 1 | 2 | 3 | 4 | 5 | 6 |
| Compositions for comparison | 1’ | 2’ | 3’ | 4’ | 5’ | 6’ |
| A’-1 solution | 97 | | | | | |
| A’-2 solution | | 97 | | | | |
| A’-3 solution | | | 97 | | | |
| A’-4 solution | | | | 97 | | |
| A’-5 solution | | | | | 97 | |
| A’-6 solution | | | | | | 105 |
| B-1 | 147 | 147 | 147 | 147 | 147 | 147 |
| B-2 | | | | | | |
| B-3 | | | | | | |
| B-4 | | | | | | |
| Ion-exchange water | 340 | 340 | 340 | 340 | 340 | 340 |
| Irgacure 500 | 10.5 | 10.5 | 10.5 | 10.5 | 10.5 | 10.5 |
| Silicone leveling agent | 2.1 | 2.1 | 2.1 | 2.1 | 2.1 | 2.1 |
| Nonvolatile content (%) | 34 | 35 | 35 | 35 | 35 | 34 |
| PH | 7.3 | 7.5 | 7.4 | 7.9 | 8.2 | 7.3 |
| Average particle size (nm) | 330 | 390 | 490 | 350 | 480 | 290 |
| (B)/(A) | 2.3 | 2.3 | 2.3 | 2.3 | 2.3 | 2.3 |

[Table 7]

| | Comparative Examples | | | |
|---|---|---|---|---|
| | 7 | 8 | 9 | 10 |
| Compositions for comparison | 7' | 8' | 9' | 10' |
| A-1 solution | 97 | 97 | 136 | 40.4 |
| B-1 | | | 122 | 183.8 |
| b-1 | 147 | | | |
| b-2 | | 147 | | |
| Ion-exchange water | 340 | 340 | 325 | 360 |
| Irgacure 500 | 10.5 | 10.5 | 10.5 | 10.5 |
| Silicone leveling agent | 2.1 | 2.1 | 2.1 | 2.1 |
| Nonvolatile content (%) | 35 | 35 | 34 | 35 |
| PH | 7.1 | 7.6 | 8.2 | 7.1 |
| Average particle size (nm) | 340 | 350 | 220 | 490 |
| (B)/(A) | 2.3 | 2.3 | 1.4 | 7.0 |

Footnote for Tables 4 to 7

Irgacure 500: Photopolymerization initiator manufactured by Ciba Specialty Chemicals

Silicone leveling agent: BYK-333 manufactured by BYK

[Table 8]

| | Examples | | | | | | |
|---|---|---|---|---|---|---|---|
| | 1 | 2 | 3 | 4 | 5 | 6 | 7 |
| Compositions | 1 | 2 | 3 | 4 | 5 | 6 | 7 |
| Storage stability test | ◎ | ○ | ◎ | ○ | ◎ | ○ | ◎ |
| Appearance evaluation | ◎ | ◎ | ◎ | ◎ | ○ | ◎ | ◎ |
| Wear resistance test | ◎ | ◎ | ○ | ○ | ◎ | ◎ | ◎ |
| Pencil hardness test | 5H | 5H | 3H | 4H | 5H | 5H | 5H |
| Adhesion test | ◎ | ◎ | ◎ | ◎ | ○ | ◎ | ◎ |
| Hot-water test resistance/Adhesion test | ◎ | ◎ | ◎ | ◎ | ○ | ◎ | ○ |
| Water resistance test | ◎ | ◎ | ◎ | ◎ | ◎ | ◎ | ○ |

[Table 9]

| | Examples | | | | | | |
|---|---|---|---|---|---|---|---|
| | 8 | 9 | 10 | 11 | 12 | 13 | 14 |
| Compositions | 8 | 9 | 10 | 11 | 12 | 13 | 14 |
| Storage stability test | ◎ | ○ | ◎ | ◎ | ◎ | ◎ | ○ |
| Appearance evaluation | ◎ | ◎ | ◎ | ◎ | ◎ | ○ | ◎ |
| Wear resistance test | ○ | ◎ | ◎ | ○ | ◎ | ○ | ◎ |
| Pencil hardness test | 5H | 5H | 5H | 4H | 5H | 4H | 5H |
| Adhesion test | ◎ | ○ | ○ | ◎ | ○ | ◎ | ○ |
| Hot-water resistance/Adhesion test | ◎ | ○ | ○ | ◎ | ○ | ○ | ○ |
| Water resistance test | ◎ | ○ | ◎ | ◎ | ○ | ○ | ○ |

[Table 10]

| | Comparative Examples | | | | |
|---|---|---|---|---|---|
| | 1 | 2 | 3 | 4 | 5 |
| Compositions | 1' | 2' | 3' | 4' | 5' |
| Storage stability test | Δ | ◎ | Δ | ◎ | × |
| Appearance evaluation | ◎ | ◎ | ◎ | ◎ | ◎ |
| Wear resistance test | ◎ | Δ | ○ | ◎ | ◎ |
| Pencil hardness test | 5H | 2H | 4H | 5H | 5H |
| Adhesion test | ◎ | ◎ | ◎ | Δ | ◎ |
| Hot-water resistance/Adhesion test | ◎ | ◎ | ◎ | Δ | ◎ |
| Water resistance test | ◎ | ◎ | ◎ | Δ | ◎ |

[Table 11]

| | Comparative Examples | | | | |
|---|---|---|---|---|---|
| | 6 | 7 | 8 | 9 | 10 |
| Compositions | 6' | 7' | 8' | 9' | 10' |
| Storage stability test | ◎ | ◎ | ◎ | ◎ | × |
| Appearance evaluation | ◎ | ◎ | ◎ | ○ | ◎ |
| Wear resistance test | ◎ | × | ◎ | × | ◎ |
| Pencil hardness test | 5H | 3H | 5H | 3H | 5H |
| Adhesion test | ◎ | ○ | Δ | ◎ | Δ |
| Hot-water resistance/Adhesion test | Δ | ○ | Δ | Δ | Δ |
| Water resistance test | Δ | ○ | Δ | Δ | Δ |

## Claims

1. An active energy-ray-curable water-based resin composition comprising:

   an acrylic resin (A), and a compound (B), wherein
   the active energy-ray-curable water-based resin composition is obtained by dispersing the compound (B) having 8.6 to 10.5 mmol/g of a polymerizable unsaturated double bond either in a resin solution prepared by dissolving the acrylic resin (A) in water or in a resin dispersion solution prepared by dispersing the acrylic resin (A) in water;
   the acrylic resin (A) is obtained by using 2 to 15 wt% of a radical polymerizable monomer represented by the general formula (1) with respect to the weight of the resin formed and 55 to 70 wt% of methyl methacrylate with respect to the weight of the resin formed;
   the acrylic resin (A) contains 1.3 to 2.7 mmol/g of a neutralized carboxyl group; and
   the ratio ((B)/(A)) of the content of the compound (B) to that of the acrylic resin (A) is 1.5 to 6 in terms of weight.

   [Chemical Formula 1]

   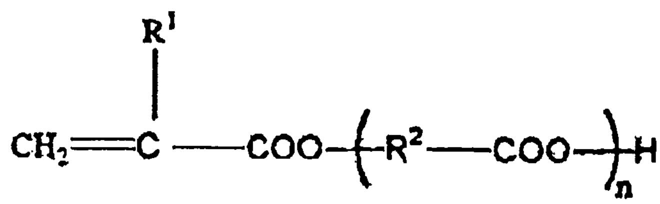

   (1)

   (wherein $R^1$ is a hydrogen atom or a methyl group; $R^2$ is an alkylene group having 2 to 8 carbon atoms; and n is an integer of 1 to 10).

2. The active energy-ray-curable water-based resin composition according to Claim 1, wherein the radical polymerizable monomer represented by the general formula (1) is a ε-carboxy-polycaprolactone (meth) acrylate.

3. The active energy-ray-curable water-based resin composition according to Claim 2, wherein the acrylic resin (A) is obtained by using 3.0 to 10.0 wt% of ε-carboxy-polycaprolactone (meth)acrylate with respect to the weight of the resin formed and 55 to 65 wt% of methyl methacrylate with respect to the weight of the resin formed, and
   the acrylic resin (A) contains 1.6 to 2.2 mmol/g of a neutralized carboxyl group.

4. The active energy-ray-curable water-based resin composition according to Claim 1, wherein the acrylic resin (A) further contains an alkyl group having 2 to 8 carbon atoms.

5. The active energy-ray-curable water-based resin composition according to Claim 1, wherein the acrylic resin (A) has a hydroxyl value of 15 to 100 mgKOH/g.

6. The active energy-ray-curable water-based resin composition according to Claim 1, wherein the acrylic resin (A) is obtained by using 3 to 10 wt% of ε-carboxy-polycaprolactone (meth)acrylate with respect to the weight of the resin formed, 55 to 65 wt% of methyl methacrylate with respect to the weight of the resin formed, 3 to 20 wt% of hydroxyethyl (meth)acrylate with respect to the weight of the resin formed, 1 to 25 wt% of butyl (meth) acrylate with respect to the weight of the resin formed, and 10 to 15 wt% of acrylic acid with respect to the weight of the resin formed.

7. The active energy-ray-curable water-based resin composition according to Claim 1, wherein the acrylic resin (A) does not contain a polymerizable unsaturated double bond.

8. The active energy-ray-curable water-based resin composition according to Claim 1, wherein
   the acrylic resin (A) is obtained by neutralizing an acrylic resin having a carboxyl group,
   the number average molecular weight of the acrylic resin (A) is 5,000 to 30,000,

the weight average molecular weight of the acrylic resin (A) is 10,000 to 100,000, and
the acid value of the acrylic resin (A) is 75 to 150 mgKOH/g.

**9.** The active energy-ray-curable water-based resin composition according to Claim 1, wherein
the acrylic resin (A) contains a neutralized carboxyl group in an amount of 1.5 to 2.2 mmol/g.

**10.** The active energy-ray-curable water-based resin composition according to Claim 1, wherein
the compound (B) has a polymerizable unsaturated double bond in an amount of 9.0 to 10.2 mmol/g.

**11.** The active energy-ray-curable water-based resin composition according to Claim 9, wherein
the compound having a polymerizable unsaturated double bond in an amount of 9.0 to 10.2 mmol/g is a compound of dipentaerythritol hexaacrylate and dipentaerythritol pentaacrylate.

**12.** The active energy-ray-curable water-based resin composition according to Claim 11, wherein
the compound (B) is a mixture further containing urethane (meth)acrylate having a polymerizable unsaturated double bond in an amount of 5.5 to 9.5 mmol/g, and
the average concentration of the polymerizable unsaturated double bond of the mixture is 9.0 to 10.2 mmol/g.

**13.** The active energy-ray-curable water-based resin composition according to Claim 12, wherein
the urethane (meth)acrylate is a reaction product of a diisocyanate compound and pentaerythritol tri(meth)acrylate.

**14.** The active energy-ray-curable water-based resin composition according to Claim 1, wherein
the ratio ((B)/(A)) of the content of the compound (B) to that of the acrylic resin (A) is 2 to 3.5.

**15.** An active energy-ray-curable coating material comprising:

the active energy-ray-curable water-based resin composition according to any one of Claims 1 to 14.

**16.** A method of forming a cured coating film comprising:

coating a substrate with the active energy-ray-curable coating material according to Claim 15 and
curing the coated active energy-ray-curable coating material by irradiating an actinic energy ray.

**17.** An article comprising the cured coating film of the active energy-ray-curable coating material according to Claim 15 is provided.

### Patentansprüche

**1.** Durch aktive Strahlung härtbare wasserbasierte Harzzusammensetzung, umfassend:

ein Acrylharz (A) und eine Verbindung (B), wobei
die durch aktive Strahlung härtbare wasserbasierte Harzzusammensetzung durch Dispergieren der Verbindung (B), die 8,6 bis 10,5 mmol/g einer polymerisierbaren ungesättigten Doppelbindung hat, entweder in einer Harzlösung, hergestellt durch Lösen des Acrylharzes (A) in Wasser, oder in einer Harzdispersionslösung, hergestellt durch Dispergieren des Acrylharzes (A) in Wasser, erhalten wird;
das Acrylharz (A) durch Verwendung von 2 bis 15 Gew.-% eines radikalisch polymerisierbaren Monomers, dargestellt durch die allgemeine Formel (1), bezogen auf das Gewicht des gebildeten Harzes, und 55 bis 70 Gew.-% Methylmethacrylat, bezogen auf das Gewicht des gebildeten Harzes, erhalten wird;
das Acrylharz (A) 1,3 bis 2,7 mmol/g einer neutralisierten Carboxylgruppe enthält und
das Verhältnis ((B)/(A)) des Gehalts an Verbindung (B) zu dem an Acrylharz (A) 1,5 bis 6, als Gewicht, ist.

[Chemische Formel 1]

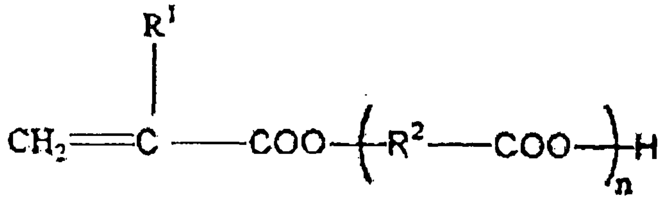

(1)

(worin $R^1$ ein Wasserstoffatom oder eine Methylgruppe ist; $R^2$ eine Alkylengruppe mit 2 bis 8 Kohlenstoffatomen ist und n eine ganze Zahl von 1 bis 10 ist).

**2.** Durch aktive Strahlung härtbare wasserbasierte Harzzusammensetzung nach Anspruch 1, wobei das radikalisch polymerisierbare Monomer, das durch die allgemeine Formel (1) dargestellt wird, ein ε-Carboxy-polycaprolacton-(meth)acrylat ist.

**3.** Durch aktive Strahlung härtbare wasserbasierte Harzzusammensetzung nach Anspruch 2, wobei
das Acrylharz (A) durch Verwendung von 3,0 bis 10,0 Gew.-% ε-Carboxy-polycaprolacton-(meth)acrylat, bezogen auf das Gewicht des gebildeten Harzes, und 55 bis 65 Gew.-% Methylmethacrylat, bezogen auf das Gewicht des gebildeten Harzes, erhalten wird und
das Acrylharz (A) 1,6 bis 2,2 mmol/g einer neutralisierten Carboxylgruppe enthält.

**4.** Durch aktive Strahlung härtbare wasserbasierte Harzzusammensetzung nach Anspruch 1, wobei das Acrylharz (A) außerdem eine Alkylgruppe mit 2 bis 8 Kohlenstoffatomen enthält.

**5.** Durch aktive Strahlung härtbare wasserbasierte Harzzusammensetzung nach Anspruch 1, wobei das Acrylharz (A) eine Hydroxylzahl von 15 bis 100 mg KOH/g hat.

**6.** Durch aktive Strahlung härtbare wasserbasierte Harzzusammensetzung nach Anspruch 1, wobei das Acrylharz (A) durch Verwendung von 3 bis 10 Gew.-% ε-Carboxy-polycaprolacton-(meth)acrylat, bezogen auf das Gewicht des gebildeten Harzes, 55 bis 65 Gew.-% Methylmethacrylat, bezogen auf das Gewicht des gebildeten Harzes, 3 bis 20 Gew.-% Hydroxyethyl-(meth)acrylat, bezogen auf das Gewicht des gebildeten Harzes, 1 bis 25 Gew.-% Butyl-(meth)acrylat, bezogen auf das Gewicht des gebildeten Harzes und 10 bis 15 Gew.-% Acrylsäure, bezogen auf das Gewicht des gebildeten Harzes, erhalten wird.

**7.** Durch aktive Strahlung härtbare wasserbasierte Harzzusammensetzung nach Anspruch 1, wobei das Acrylharz (A) keine polymerisierbare ungesättigte Doppelbindung enthält.

**8.** Durch aktive Strahlung härtbare wasserbasierte Harzzusammensetzung nach Anspruch 1, wobei das Acrylharz (A) durch Neutralisieren eines Acrylharzes mit einer Carboxylgruppe erhalten wird,
das zahlenmittlere Molekulargewicht des Acrylharzes (A) 5.000 bis 30.000 ist,
das gewichtsmittlere Molekulargewicht des Acrylharzes (A) 10.000 bis 100.000 ist und
die Säurezahl des Acrylharzes (A) 75 bis 150 mg KOH/g ist.

**9.** Durch aktive Strahlung härtbare wasserbasierte Harzzusammensetzung nach Anspruch 1, wobei das Acrylharz (A) eine neutralisierte Carboxylgruppe in einer Menge von 1,5 bis 2,2 mmol/g enthält.

**10.** Durch aktive Strahlung härtbare wasserbasierte Harzzusammensetzung nach Anspruch 1, wobei die Verbindung (B) eine polymerisierbare ungesättigte Doppelbindung in einer Menge von 9,0 bis 10,2 mmol/g hat.

**11.** Durch aktive Strahlung härtbare wasserbasierte Harzzusammensetzung nach Anspruch 9, wobei die Verbindung, die eine polymerisierbare ungesättigte Doppelbindung in einer Menge von 9,0 bis 10,2 mmol/g hat, eine Verbindung von Dipentaerythritolhexaacrylat und Dipentaerythritolpentaacrylat ist.

**12.** Durch aktive Strahlung härtbare wasserbasierte Harzzusammensetzung nach Anspruch 11, wobei die Verbindung

(B) ein Gemisch ist, das außerdem Urethan-(meth)acrylat mit einer polymerisierbaren ungesättigten Doppelbindung in einer Menge von 5,5 bis 9,5 mmol/g enthält, und
die durchschnittliche Konzentration der polymerisierbaren ungesättigten Doppelbindung des Gemisches 9,0 bis 10,2 mmol/g ist.

**13.** Durch aktive Strahlung härtbare wasserbasierte Harzzusammensetzung nach Anspruch 12, wobei das Urethan-(meth)acrylat ein Reaktionsprodukt einer Diisocyanatverbindung und Pentaerythritoltri(meth)acrylat ist.

**14.** Durch aktive Strahlung härtbare wasserbasierte Harzzusammensetzung nach Anspruch 1, wobei das Verhältnis ((B)/(A)) des Gehalts an Verbindung (B) zu dem an Acrylharz (A) 2 bis 3,5 ist.

**15.** Durch aktive Strahlung härtbares Beschichtungsmaterial, umfassend:

die durch aktive Strahlung härtbare wasserbasierte Harzzusammensetzung nach einem der Ansprüche 1 bis 14.

**16.** Verfahren zur Bildung eines gehärteten Beschichtungsfilms, umfassend:

Beschichten eines Substrats mit dem durch aktive Strahlung härtbaren Beschichtungsmaterial nach Anspruch 15 und
Härten des aufgetragenen durch aktive Strahlung härtbaren Beschichtungsmaterials durch Bestrahlen mit aktinischer Energiestrahlung.

**17.** Gegenstand, umfassend den gehärteten Beschichtungsfilm des durch aktive Strahlung härtbaren Beschichtungsmaterials nach Anspruch 15.

## Revendications

**1.** Composition de résine à base aqueuse durcissable par rayonnement d'énergie active comprenant :

une résine acrylique (A) et un composé (B), dans laquelle
la composition de résine à base aqueuse durcissable par rayonnement d'énergie active est obtenue par dispersion du composé (B) comprenant de 8,6 à 10,5 mmol/g d'une double liaison insaturée polymérisable dans une solution de résine préparée en dissolvant la résine acrylique (A) dans de l'eau ou dans une dispersion de résine préparée en dispersant la résine acrylique (A) dans de l'eau ;
la résine acrylique (A) est obtenue en utilisant de 2 à 15 % en poids d'un monomère radicalaire polymérisable représenté par la formule générale (1) par rapport au poids de la résine formée et de 50 à 70 % en poids de méthacrylate de méthyle par rapport au poids de la résine formée ;
la résine acrylique (A) comprend de 1,3 à 2,7 mmol/g d'un groupe carboxy neutralisé ; et
le rapport ((B)/(A)) de la teneur du composé (B) à celle de la résine acrylique (A) est de 1,5 à 6 en terme de poids.

[Formule chimique 1]

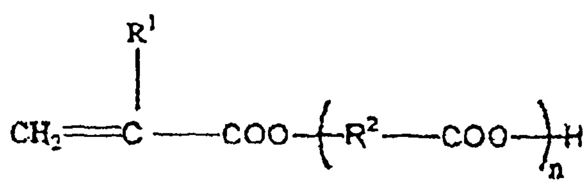

(1)

(dans laquelle $R^1$ est un atome d'hydrogène ou un groupe méthyle ; $R^2$ est un groupe alkylène comprenant de 2 à 8 atomes de carbone ; et n est un entier de 1 à 10).

**2.** Composition de résine à base aqueuse durcissable par rayonnement d'énergie active selon la revendication 1, dans laquelle
le monomère radicalaire polymérisable représenté par la formule générale (1) est un (méth)acrylate de ε-carboxy-polycaprolactone.

3. Composition de résine à base aqueuse durcissable par rayonnement d'énergie active selon la revendication 2, dans laquelle
la résine acrylique (A) est obtenue en utilisant de 3,0 à 10,0 % en poids de (méth)acrylate de ε-carboxy-polycaprolactone par rapport au poids de la résine formée et de 55 à 65 % en poids de méthacrylate de méthyle par rapport au poids de la résine formée, et
la résine acrylique (A) contient de 1,6 à 2,2 mmol/g d'un groupe carboxy neutralisé.

4. Composition de résine à base aqueuse durcissable par rayonnement d'énergie active selon la revendication 1, dans laquelle
la résine acrylique (A) comprend en outre un groupe alkyle comprenant de 2 à 8 atomes de carbone.

5. Composition de résine à base aqueuse durcissable par rayonnement d'énergie active selon la revendication 1, dans laquelle
la résine acrylique (A) possède un indice d'hydroxyle de 15 à 100 mg de KOH/g.

6. Composition de résine à base aqueuse durcissable par rayonnement d'énergie active selon la revendication 1, dans laquelle
la résine acrylique (A) est obtenue en utilisant de 3 à 10 % en poids de (méth)acrylate de ε-carboxy-polycaprolactone par rapport au poids de la résine formée, de 55 à 65 % en poids de méthacrylate de méthyle par rapport au poids de la résine formée, de 3 à 20 % en poids de (méth)acrylate d'hydroxyéthyle par rapport au poids de la résine formée, de 1 à 25 % en poids de (méth)acrylate de butyle par rapport au poids de la résine formée et de 10 à 15 % en poids d'acide acrylique par rapport au poids de la résine formée.

7. Composition de résine à base aqueuse durcissable par rayonnement d'énergie active selon la revendication 1, dans laquelle
la résine acrylique (A) ne comprend pas de double liaison insaturée polymérisable.

8. Composition de résine à base aqueuse durcissable par rayonnement d'énergie active selon la revendication 1, dans laquelle
la résine acrylique (A) est obtenue par neutralisation d'une résine acrylique comprenant un groupe carboxy,
le poids moléculaire moyen en nombre de la résine acrylique (A) est de 5000 à 30 000,
le poids moléculaire moyen en poids de la résine acrylique (A) est de 10 000 à 100 000, et
l'indice d'acidité de la résine acrylique (A) est de 75 à 150 mg de KOH/g.

9. Composition de résine à base aqueuse durcissable par rayonnement d'énergie active selon la revendication 1, dans laquelle
la résine acrylique (A) comprend un groupe carboxy neutralisé en une quantité de 1,5 à 2,2 mmol/g.

10. Composition de résine à base aqueuse durcissable par rayonnement d'énergie active selon la revendication 1, dans laquelle
le composé (B) comprend une double liaison insaturée polymérisable en une quantité de 9,0 à 10,2 mmol/g.

11. Composition de résine à base aqueuse durcissable par rayonnement d'énergie active selon la revendication 9, dans laquelle
le composé comprenant une double liaison insaturée polymérisable en une quantité de 9,0 à 10,2 mmol/g est un composé d'hexaacrylate de dipentaérythritol et de pentaacrylate de dipentaérythritol.

12. Composition de résine à base aqueuse durcissable par rayonnement d'énergie active selon la revendication 11, dans laquelle
le composé (B) est un mélange comprenant en outre du (méth)acrylate d'uréthane comprenant une double liaison insaturée polymérisable en une quantité de 5,5 à 9,5 mmol/g, et
la concentration moyenne de la double liaison insaturée polymérisable du mélange est de 9,0 à 10,2 mmol/g.

13. Composition de résine à base aqueuse durcissable par rayonnement d'énergie active selon la revendication 12, dans laquelle
le (méth)acrylate d'uréthane est un produit réactionnel d'un composé de diisocyanate et de tri(méth)acrylate de pentaérythritol.

**14.** Composition de résine à base aqueuse durcissable par rayonnement d'énergie active selon la revendication 1, dans laquelle
le rapport ((B)/(A)) de la teneur du composé (B) à celle de la résine acrylique (A) est de 2 à 3,5.

**15.** Matériau de revêtement durcissable par rayonnement d'énergie active comprenant
la composition de résine à base aqueuse durcissable par rayonnement d'énergie active selon l'une quelconque des revendications 1 à 14.

**16.** Procédé de formation d'un film de revêtement durci comprenant
le revêtement d'un substrat avec le matériau de revêtement durcissable par rayonnement d'énergie active selon la revendication 15, et
le durcissement du matériau de revêtement durcissable par rayonnement d'énergie active par irradiation d'un rayonnement d'énergie actinique.

**17.** Article comprenant le film de revêtement durci du matériau de revêtement durcissable par rayonnement d'énergie active selon la revendication 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9302266 B
- JP 2004010779 A


### Non-patent literature cited in the description


- **J. Brandrup ; E. H. Immergut ; E. A. Grulke.** Polymer Handbook. Wiley Interscience